# FASCICULE DE BREVET EUROPEEN

(11) **EP 3 313 581 B1**
(45) Date de publication et mention de la délivrance du brevet: **13.11.2019**
(21) Numéro de dépôt: 16741103.2
(22) Date de dépôt: 24.06.2016
(51) Int. Cl.: B05B 3/10, A01M 7/00, B05B 7/00, B05B 7/04, B05B 7/08

(54) **UNITÉ DE PULVÉRISATION, MODULE DE PULVÉRISATION COMPACT COMPRENANT UNE TELLE UNITÉ ET SYSTÈME DE PULVÉRISATION ET DE PILOTAGE COMPRENANT UNE PLURALITÉ DE TELS MODULES**
SPRÜHEINHEIT, KOMPAKTES SPRÜHMODUL MIT EINER DERARTIGEN EINHEIT SOWIE SPRÜH- UND STEUERUNGSSYSTEM MIT EINER VIELZAHL SOLCHER MODULE
SPRAYING UNIT, COMPACT SPRAYING MODULE INCLUDING SUCH A UNIT, AND SPRAYING AND CONTROL SYSTEM INCLUDING A PLURALITY OF SUCH MODULES

(30) Priorité: 25.06.2015 FR 1555894
(43) Date de publication de la demande: 02.05.2018
(73) Titulaire: Pellenc (Société Anonyme), 84120 Pertuis (FR)
(72) Inventeur: PELLENC, Roger, 84120 Pertuis (FR); GIALIS, Jean-Marc, 84460 Cheval Blanc (FR)
(74) Mandataire: Nuss, Laurent
(86) Numéro de dépôt international: PCT/FR2016/051561
(87) Numéro de publication internationale: WO 2016/207571

(56) Documents cités:
- DE-A1- 2 823 253
- GB-A- 893 693
- JP-A- 2010 036 090
- US-A1- 2011 089 258

## Description

L'invention se situe dans le domaine des appareils projetant un liquide sous la forme de gouttelettes mêlées à un flux d'air porteur sur une cible constituée par exemple d'un matelas végétal, et a pour objet une unité de pulvérisation. Elle a également pour objet un module de pulvérisation compact comprenant une telle unité de pulvérisation et un système de pulvérisation et de pilotage comprenant une pluralité de tels modules.

Elle est applicable notamment dans le domaine agricole pour le traitement des grandes cultures, de l'arboriculture ou de la viticulture. Elle sera décrite ci-après par souci de simplification dans son application au secteur viticole, nécessitant d'importants apports en produits phytosanitaires. L'apport de ces derniers dans la nature peut générer à plus ou moins long terme des conséquences graves sur le plan sanitaire comme sur le plan écologique mais aussi au plan économique. Ces produits sont en effet l'une des principales sources de pollution des eaux, des sols et des nappes phréatiques et leur inhalation voire leur ingestion a des conséquences irréversibles sur la santé des utilisateurs. Sur le plan économique, outre le coût important des produits et de leur mise en œuvre, l'inefficacité d'un traitement peut entrainer des dommages irréversibles sur la récolte.

Dans ce contexte, les pouvoirs publics ont durci ces dernières années les normes sur les appareils de traitement, imposant par exemple en France un contrôle technique obligatoire tous les 5 ans des appareils de pulvérisation. Dans un autre axe, des matières actives identifiées comme étant les plus dangereuses sont interdites ou leur dose homologuée réduite. Il est clair que ces normes ne vont pas cesser d'évoluer à l'avenir et donc durcir plus avant la situation règlementaire des machines et des produits. Cette évolution nécessite la conception de nouvelles machines de pulvérisation permettant d'utiliser de façon judicieuse des doses minimales de matière active vers une cible végétale visée tout en limitant leur consommation énergétique pour préserver à la fois l'environnement, la santé des végétaux concernés mais aussi celle des opérateurs ayant à piloter de telles machines.

On connaît plusieurs types de pulvérisateurs utilisés dans le domaine viticole pour les traitements de couverture ou localisés à la zone des grappes de raisins, et notamment les quatre types de pulvérisateurs suivants : à jet projeté, à jet porté, pneumatique et centrifuge.

Tous ces appareils ont en commun la projection sur la végétation de bouillie (terme utilisé pour définir le liquide à projeter composé généralement d'un mélange d'eau et de matière active) qui est acheminée sous forme liquide et sous pression dans une canalisation aboutissant à une buse de pulvérisation. La bouillie est micronisée en gouttelettes au niveau de la buse, et dirigée vers la végétation par différents moyens selon la technologie de l'appareil de pulvérisation. La buse comporte un ajutage calibré, le plus souvent constitué par l'orifice formé dans une plaquette de faible épaisseur, cet orifice traversant de la plaquette pouvant avoir des formes variées (cylindre, prisme, cône, ...) mais de petite taille pour pouvoir transformer le liquide sous pression en amont en gouttelettes en aval. L'ajutage définit le débit de bouillie qui sera pulvérisée et la taille des gouttelettes. Ce débit de bouillie n'est toutefois pas contrôlé précisément car dépendant notamment des conditions de pression du liquide en amont, différentes pour chaque buse, car fonction de la géométrie et de longueur de canalisation entre la pompe et la buse, et de l'usure au cours du temps de l'ajutage dû à l'abrasion de son orifice au passage des produits.

Dans les appareils à jet projeté, comportant de façon générale une pluralité de buses pour couvrir la zone à pulvériser, la bouillie est transformée en gouttelettes au niveau de chaque buse par l'effet combiné de la pression du liquide en amont de l'ajutage et de la géométrie de l'ajutage, cet effet communiquant aussi auxdites gouttelettes une énergie cinétique et une direction de leur pulvérisation. Les gouttelettes sont ainsi projetées directement dans l'air ambiant généralement sous la forme d'un cône d'épandage d'angle plus ou moins important dépendant là aussi de la forme de l'ajutage et de la pression de la bouillie en amont de ce dernier. D'autre part, plus la pression de la bouillie est élevée, plus les gouttelettes formées en sortie de l'ajutage auront une vitesse importante mais plus elles seront alors de petite taille, limitant leur énergie cinétique et donc leur capacité à atteindre les feuilles et les grappes, en ajoutant le fait de leur évaporation entre la sortie de la buse et la végétation ciblée. Les gouttelettes peuvent être aussi soumises à une dérive importante de leur trajectoire en cas de vent. Il est aussi connu sur ce type d'appareil qu'une grande variation de pression ne génère qu'une faible variation de débit, tout en faisant varier de façon importante la taille des gouttelettes. Ce type d'appareil définit alors un optimum de fonctionnement entre la pression et l'ajutage au niveau de chaque buse qui n'autorise que peu ou pas de réglage du débit de bouillie pour pulvériser la végétation ciblée, c'est-à-dire que le débit n'est pas contrôlé en amont de l'ajutage. Le changement de débit de bouillie projeté vers la végétation nécessite alors de changer toutes les buses (ou leur ajutage) par une intervention humaine longue, fastidieuse, et nécessitant le port d'équipements de sécurité.

Dans les appareils à jet porté, la bouillie est toujours acheminée sous pression au niveau de la buse avec un effet similaire aux appareils à jet projeté. Dans cette technologie toutefois, un flux d'air à grande vitesse (grand débit d'air à des vitesses de l'ordre de 100 à 200 km/h) va entourer la buse pour porter les gouttelettes vers la végétation, accentuant la vitesse des gouttelettes vers la végétation ciblée et favorisant leur pénétration. Ce flux d'air est fourni par un système de ventilation centralisé sur la machine et va être canalisé ensuite vers chaque buse de pulvérisation. Ainsi, avec un appareil à jet porté, la taille des gouttelettes est toujours déterminée par la combinaison de la pression et de l'ajutage, mais c'est essentiellement le flux d'air au niveau de l'ajutage qui va transporter les gouttelettes dans une trajectoire orientée vers la végétation ciblée, en diminuant fortement la sensibilité de ladite trajectoire à l'influence des vents extérieurs, et en limitant l'évaporation des gouttelettes au cours de leur trajectoire.

Toutefois, à l'instar de la technologie à jet projeté, le débit au niveau de chaque buse n'est qu'indicatif, non contrôlé, différent d'une buse à une autre et ne peut varier que sur une faible plage de débit, nécessitant de changer les buses (ou leur ajutage) pour modifier le débit de bouillie à pulvériser. De plus, l'air nécessaire à la constitution du flux d'air est généré de façon centralisé puis distribué vers les différentes buses au travers d'un circuit de canalisations long et complexe générant des pertes de charge importantes, des vitesses d'air différentes et non contrôlées d'une buse à l'autre ainsi qu'une consommation énergétique surabondante. Les turbines de fortes puissances utilisées ici sont de plus particulièrement bruyantes.

Contrairement aux appareils à jet porté ou à jet projeté, les appareils pneumatiques forment directement les gouttelettes à partir d'un flux d'air à grande vitesse accéléré au niveau de la buse (généralement de 300 à 500 km/h) appelée ici un éclateur (souvent un simple ajutage). La bouillie est amenée sous pression au niveau de l'éclateur pour former une veine de liquide non micronisée en l'absence de flux d'air. Le flux d'air à grande vitesse est accéléré au niveau de l'éclateur (par exemple par effet venturi) pour générer la micronisation de la veine de liquide en gouttelettes. La taille des gouttelettes sur de tels appareils est liée à la vitesse du flux d'air en relation étroite avec le débit de la bouillie au niveau de l'éclateur. Un changement de vitesse d'air doit alors toujours s'accompagner d'un changement de débit, et de façon générale d'ajutage de l'éclateur, pour ne pas pénaliser la qualité de pulvérisation. Et inversement, un changement d'ajutage pour modifier le débit nécessitera aussi d'adapter la vitesse du flux d'air. Le principe de fonctionnement de ces appareils génère là aussi, comme les technologies précédemment évoquées, des débits et des vitesses d'air différents d'une buse à une autre résultant, dans la pulvérisation au niveau de la végétation ciblée, d'un débit de bouillie indicatif et non contrôlé. La génération du flux d'air est là aussi centralisée, fortement consommatrice d'énergie et particulièrement bruyante.

Les inconvénients majeurs de ces 3 premières technologies peuvent être résumés comme suit:
- les paramètres de pulvérisation, tels que par exemple le débit ou la vitesse d'air, sont indicatifs au niveau de chaque buse, différents d'une buse à une autre et dérivent dans le temps suite notamment à l'usure des ajutages. Ces systèmes ne permettent donc pas de contrôler et maitriser précisément ces paramètres de pulvérisation au niveau de chaque buse, tout autant qu'ils ne permettent pas de faire varier ces paramètres dans une plage importante avec la même buse pour être adaptés de façon instantanée à la végétation rencontrée en cours de traitement. Pourtant de nombreux facteurs tels que la nature du terrain, l'âge et le cépage de la vigne, peuvent entrainer des quantités de masse végétale très différentes d'un cep de vigne à l'autre qui nécessiteraient des débits de bouillie pouvant être modifiés rapidement et sur des plages importantes pour s'adapter aux masses végétales en regard des buses de pulvérisation. Ce point incite l'opérateur à plutôt positionner les calibrages (buses, ajutages, éclateurs) des machines de l'état de l'art à leur débit maximum de façon à éviter de perdre du temps à les changer autant que cela est nécessaire, ce qui entraîne alors une consommation surabondante de bouillie. Il n'est donc pas envisageable avec ces technologies d'imaginer des variations dynamiques des paramètres de pulvérisation sur la végétation rencontrée en cours de traitement,
- le changement de débit, le réglage, le nettoyage et la maintenance imposent une intervention humaine longue et fastidieuse qui, compte tenu de la toxicité des bouillies, nécessite l'utilisation de protections individuelles et des protocoles opératoires très contraignants, voire irréalisables (changement de dizaines de buses ou d'ajutages pour modifier un débit ou changer le produit de traitement, nettoyage des cuves et des canalisations de bouillie, ...),
- la petite taille des ajutages pour assurer l'efficacité de la micronisation impose une bouillie ayant un fort taux de dilution des produits phytosanitaires pour éviter leur colmatage par des agglomérats de bouillie mal dispersés dans l'eau, empêchant ainsi de travailler avec des volumes d'épandages de bouillie faibles (inférieurs par exemple à 100 litres par hectare, alors que les volumes classiques varient dans une plage de l'ordre de 200 à 800 litres par hectare en fonction de la végétation et du type de bouillie à pulvériser). De fait, l'autonomie du pulvérisateur, compte tenu du fort taux de dilution des produits phytosanitaires, nécessite des ensembles de pulvérisation comprenant de grosses cuves de 1000 à 2000 litres de liquides, et par conséquent des volumes équivalents d'eau claire. Le poids de cet ensemble nécessite des véhicules tracteurs puissants pour associer la traction de l'ensemble de pulvérisation et son fonctionnement,
- les pressions nécessaires au niveau des ajutages sont élevées, pouvant atteindre facilement des valeurs de l'ordre de 30 bars, entrainant des pompes de technologie coûteuses, lourdes et encombrantes, et demandant une énergie importante dissipée au niveau de la pompe.
- la génération du flux d'air dans les technologies pneumatiques ou à jet porté se fait grâce à une turbine unique de grand diamètre, très bruyante, associée généralement à un réseau de gaines flexibles qui entrainent des pertes de charges importantes, nécessitant un surdimensionnement de la turbine et de fait une puissance de l'ordre de 30 kW entrainant une consommation plus importante du véhicule tracteur. En outre, la turbine a une grande inertie qui génère un temps de démarrage et d'arrêt de celle-ci sur une durée de plusieurs secondes ne permettant pas de fréquentes séquences d'arrêt et de démarrage durant le traitement (bout de rang, pointe, absence momentanée de végétation, manœuvre...), ce qui entraine alors une consommation inutile et polluante de bouillie et de carburant.

La technologie centrifuge, qui est la plus récente dans ce domaine, permet de résoudre une partie des problèmes posés par les trois autres technologies précitées.

Le document FR 2 497 439 a pour objet une installation de pulvérisation utilisant la technologie centrifuge, dans laquelle les gouttelettes sont formées par une buse rotative de grand diamètre, sur la partie centrale de laquelle un ajutage projette la bouillie à pulvériser. Un collecteur en forme de secteur d'anneau, d'angle fixe ou réglable, est fixé en regard du pourtour de la buse rotative, sans contact avec elle, de façon à intercepter la bouillie pulvérisée dans le secteur correspondant au collecteur et de limiter la zone de pulvérisation à la partie correspondant au secteur libre du collecteur. Les gouttelettes sont ici formées par éclatement due à la force centrifuge de la veine liquide de bouillie quand elle arrive à l'extrémité de la buse en rotation. Cette technologie de buse rotative possède l'avantage d'épandre de faibles quantités de bouillie, quantités qui nécessiteraient dans les autres technologies de réduire considérablement la taille des ajutages pour obtenir un faible débit de bouillie, en augmentant ainsi le risque de colmatage de ceux-ci. Tout en utilisant le même ajutage et donc un débit donné de bouillie arrivant sur la buse, le choix approprié de l'angle couvert par le collecteur en forme de secteur d'anneau permet de régler un débit de bouillie pulvérisé vers la végétation dépendant de la taille du secteur ouvert dans le collecteur et donc forcément inférieur au débit de bouillie arrivant sur la buse.

Toutefois, l'installation du document FR 2 497 439 possède les inconvénients suivants:
- la partie de bouillie non répandue sur la végétation est normalement recyclée par l'anneau collecteur. Mais une partie de cette bouillie est perdue de façon non contrôlée par débordement ou égouttage du produit recyclé du collecteur, entrainant une perte de bouillie et une pollution non souhaitée de l'environnement. Ainsi, toute la bouillie arrivant au niveau de l'ajutage n'est pas directement et totalement projetée vers la végétation,
- la bouillie recyclée perd de ses caractéristiques du fait de son exposition à l'atmosphère : la concentration en produit actifs est modifiée du fait d'une première pulvérisation (par évaporation de l'eau par exemple), la bouillie peut être recyclée plusieurs fois avant d'être épandue sur la végétation. Ainsi, la qualité de la bouillie pulvérisée vers la végétation n'est pas constante,
- le débit de bouillie projeté vers la végétation dépend de l'angle d'ouverture du secteur libre du collecteur. Il est donc impossible de modifier ce débit sur une même portion de matelas végétal en regard du secteur libre, puisque seule alors une portion plus grande de matelas végétal sera impactée par l'ouverture du secteur libre du collecteur. Le changement de débit sur une portion identique de matelas végétal nécessitera alors le changement de l'ajutage avec les inconvénients des technologies précédemment évoquées,
- le débit projeté vers la végétation est indicatif et ne peut être contrôlé précisément compte tenu des pertes et des recyclages de liquide évoqués ci-dessus,
- l'énergie cinétique des gouttelettes pour atteindre la végétation est générée uniquement par la buse rotative. On retrouve ainsi les inconvénients de la technologie à jet projeté.

Toujours dans la technologie centrifuge utilisant des buses rotatives ayant pour effet de microniser un liquide, c'est-à-dire une bouillie sous forme liquide en gouttelettes, le document US6152382 a pour objet un appareil de pulvérisation modulaire incluant au moins un module de pulvérisation comprenant une tuyère formée par un tube cylindrique ouvert à ses deux extrémités, ladite tuyère générant un flux d'air porteur généré par un ventilateur axial positionné à l'une de ses extrémités, ledit flux d'air porteur agissant en sortie de tuyère sur une buse rotative, connue également sous le nom d'atomiseur rotatif, se présentant sous la forme d'une pièce conique dont l'extrémité dépasse de l'ouverture de sortie de la tuyère à l'extérieur de cette dernière. Ledit flux d'air porteur est toutefois décomposé en deux flux d'air laminaires, à savoir un flux d'air laminaire axial autour de la buse rotative et orienté axialement afin de répartir la bouillie uniformément sur une faible épaisseur de la partie conique de la buse rotative et communiquer une énergie cinétique aux gouttelettes générées par centrifugation à l'extrémité de la buse rotative dans une direction prévisible, et un flux d'air laminaire hélicoïdal organisé autour du flux d'air laminaire axial, le mélange des deux s'effectuant entre la sortie du module et le matelas végétal, pour faire pénétrer les gouttelettes sur toutes les faces des feuilles dudit matelas végétal. La bouillie est acheminée dans chaque module par un tube d'amenée traversant la paroi de l'enceinte du module correspondant pour déboucher au niveau de la surface externe conique de la buse rotative dans une zone couverte par le flux d'air laminaire axial, à partir d'un réservoir central et par l'intermédiaire d'une ou plusieurs pompes (une pompe par rampe de pulvérisation de plusieurs modules) éloignées du module fournissant un débit indicatif au niveau de chaque module ainsi que des conditions de débit similaires d'un module à l'autre. Les débits au niveau de chaque module ne sont donc pas contrôlés et ne peuvent être modulés dans des plages sensiblement différentes d'un module à l'autre.

De plus, avec le type d'appareil divulgué par le document US6152382, la bouillie arrive sur la surface conique de la buse rotative entourée du flux d'air laminaire axial générant un égouttage par combinaison de l'effet de la gravité et de l'aspiration générée par le flux d'air laminaire axial au niveau du tube d'amenée suivi par un décrochement de grosses gouttes dans le flux d'air laminaire axial, voire traversant les deux flux d'airs laminaires successifs pour aboutir hors de la surface végétale ciblée. Par ailleurs, l'effet vortex du flux d'air laminaire hélicoïdal rallonge considérablement le trajet des gouttelettes entre la sortie du module et le végétal, augmentant le risque de séchage des gouttelettes au cours de ce trajet, ces dernières perdant en effet rapidement l'énergie nécessaire pour atteindre le végétal ciblé. Mais aussi, les moyens développés pour générer chaque flux d'air de façon laminaire sous la forme de deux ensembles de canaux multicouches augmentent considérablement la surface de frottement entre l'air et ces canaux et donc les pertes de charge à l'intérieur du module, celles-ci étant encore accentuées dans la zone de cisaillement d'air générée à l'interface des deux flux d'air laminaires, à l'extérieur du module lors du mélange entre les deux flux d'air laminaires, mais aussi lors de leur interaction avec l'air ambiant en sortie de module. Le rendement électrique du système est ainsi sérieusement affecté. Plus encore, ce système nécessite la mise en place de deux moteurs par module pour générer d'une part les deux flux d'air laminaires et d'autre part la micronisation de la bouillie, ce qui a pour résultat d'augmenter le poids, l'encombrement et la complexité de gestion du système. Enfin, la mise en place d'électrovannes à distance du module permettant de distribuer la bouillie arrivant sur la buse rotative ne permet pas, en cas de coupure d'alimentation de la bouillie de stopper de façon instantanée la production de gouttes ou de gouttelettes compte tenu de l'interaction directe du flux d'air laminaire axial sur l'arrivée de bouillie de la buse rotative et de l'aspiration inéluctable par le flux d'air laminaire axial de la quantité de bouillie située entre l'électrovanne et l'extrémité du tube d'amenée.

Le document DE 28 23 253 A1 divulgue un générateur d'aérosol comprenant un carter entourant des réservoirs et une tête rotative placée dans l'axe de et devant ces derniers, ladite tête comportant des disques distributeurs arrière et avant entourés par une paroi de rebond et de guidage ménagée dans la paroi interne du carter et qui s'élargit en direction de l'orifice de sortie de façon à former avec la surface périphérique de la tête un intervalle ou canal annulaire destiné à recevoir un fluide gazeux de propulsion de la matière à distribuer, tandis qu'une fente de décharge est formée entre les deux disques distributeurs. En fonctionnement, la matière à distribuer est extraite radialement par la fente de décharge vers la paroi de rebond et de guidage et il se produit, sous l'effet de l'impact contre la paroi de rebond et de guidage, en coopération avec l'action du fluide gazeux de propulsion entraîné dans l'intervalle, une désagrégation de ladite matière en vue de sa distribution. La rotation de la tête permet de créer une composante radiale supplémentaire de déplacement imprimée à la matière sortant de la fente pour augmenter l'intensité de la dégradation contre la surface de fragmentation formée par la surface interne de la dite paroi. En outre, dans une forme de réalisation particulière, une partie de la matière désagrégée sortant de la fente sous une forme déjà finement divisée est introduite dans l'air passant dans l'intervalle annulaire alors que l'autre partie de la matière désagrégée d'une façon relativement grossière subit une division plus fine par impact sur la paroi de rebond et de guidage.

Le document GB 893 693 A a pour objet un appareil de production d'un aérosol comprenant un ventilateur pour produire un flux d'air, deux disques avant et arrière centrifuge entraînés en rotation par un moteur et délimitant entre leurs bords périphériques une fente permettant de laisser passer un film de liquide et un canal d'air, formé entre une partie de boîtier interne et une partie de boitier externe, pour guider le flux d'air axialement sur le film de liquide propulsé au-dessus desdits bords de sorte à fragmenter ce dernier en gouttelettes fines. Les deux disques sont situés à l'extérieur des parties de boîtier interne et externe à la sortie du canal d'air. En outre des lamelles entourent radialement les bords périphériques des deux disques dans l'espace extérieur situé en regard de la sortie du canal d'air. Le film liquide est propulsé par la fente dans l'espace occupé par les lamelles à l'extérieur et à la sortie du canal d'air de sorte à être impacté par le flux d'air pour réaliser sa fragmentation en gouttelettes. En outre, une partie du liquide projeté à l'extérieur entre en contact avec les lamelles qui le fragmentent en fines gouttelettes.

Toutefois, dans ces deux documents DE 28 23 253 A1 et GB 893 693 A, la partie de la fragmentation réalisée par le contact de la matière ou du liquide projeté sur la paroi interne de la tuyère ou sur les ailettes, génère un égouttage et une perte de liquide vers la cible.

La présente invention a pour but de pallier au moins un de ces inconvénients en proposant une unité de pulvérisation prévue pour recevoir un liquide à débit variable contrôlé et l'aspiration d'air ambiant pour générer un flux d'air porteur capable de projeter en sortie ou en aval de l'unité de pulvérisation ledit flux d'air mêlé dudit liquide sous la forme de gouttelettes vers une cible, avec une dynamique élevée, un excellent rendement énergétique et un très faible impact environnemental.

On entend par liquide à débit variable contrôlé, le débit d'un liquide issu d'un réservoir et fourni par un système d'alimentation en liquide sous la commande et/ou le contrôle d'une intelligence électronique, par exemple une unité de commande et de contrôle électronique fonctionnant sur la base d'un microprocesseur, permettant de réguler un débit donné selon une consigne de débit correspondante et ce indépendamment de la pression dans le circuit hydraulique.

On entend par très faible impact environnemental, le fait de pouvoir éviter la projection de bouillie en dehors de la végétation ciblée, de pouvoir pulvériser la juste quantité de bouillie en adaptant en cours de pulvérisation le débit de bouillie de manière contrôlée en fonction de la végétation ciblée, d'éviter toute perte de bouillie par égouttage au sol, de pouvoir arrêter la pulvérisation de bouillie instantanément en l'absence de végétation, de pouvoir limiter la consommation d'eau claire pour la bouillie ou le nettoyage du système et enfin de limiter de façon drastique l'énergie nécessaire à l'opération de pulvérisation.

A cet effet, l'unité de pulvérisation, selon la présente invention, pour la pulvérisation d'un liquide sous forme de gouttelettes pour le traitement d'une cible, telle que par exemple une haie végétale, ladite unité de pulvérisation comprenant une tuyère formée par un conduit s'étendant le long d'un axe longitudinal en délimitant intérieurement un espace interne principal et étant ouvert à ses extrémités pour former une ouverture d'entrée d'air et une ouverture de sortie d'air, l'espace interne principal recevant au moins un atomiseur rotatif monté en rotation autour d'un premier axe de rotation, des moyens d'acheminement pour acheminer le liquide, provenant d'un système d'alimentation avec un débit variable contrôlé, jusqu'à l'atomiseur rotatif, un ventilateur comportant au moins une hélice montée en rotation autour d'un second axe de rotation et permettant de générer un flux d'air porteur dans l'espace interne principal vers et au-delà de l'ouverture de sortie d'air et un système d'entraînement à moteur(s) électrique(s) permettant d'assurer l'entraînement en rotation desdits atomiseur rotatif et hélice, des moyens de raccordement à une source d'énergie électrique pour fournir l'énergie électrique au système d'entraînement et un fuselage interne présentant un profil aérodynamique défini par une surface latérale délimitant intérieurement un espace interne secondaire et étant maintenu axialement dans l'espace interne principal entre le ventilateur et l'ouverture de sortie d'air de sorte à définir, entre le fuselage et la tuyère, un canal annulaire de circulation du flux d'air porteur entourant ledit fuselage se caractérisant essentiellement en ce que ledit atomiseur rotatif comprend une surface de réception prévue pour recevoir le liquide et pour assurer exclusivement, à sa périphérie ou son extrémité, à l'état de rotation dudit atomiseur rotatif, la fragmentation du liquide en gouttelettes et leur propulsion dans le flux d'air porteur, et en ce que le fuselage comprend un tronçon rotatif formé par l'atomiseur rotatif de sorte que la périphérie ou l'extrémité de la surface de réception s'inscrit sensiblement dans la surface latérale du fuselage tout en permettant la rotation de l'atomiseur rotatif et la propulsion, de préférence sensiblement perpendiculairement à l'axe longitudinal, dudit liquide sous la forme de gouttelettes dans ledit canal pour être incorporées dans le flux d'air.

La présente invention a également pour objet un module de pulvérisation compact pour la pulvérisation d'un liquide sous forme de gouttelettes pour le traitement d'une cible, telle que par exemple une haie végétale, se caractérisant essentiellement en ce qu'il comprend :
- une unité de pulvérisation telle que définie selon l'invention,
- un système d'alimentation en liquide relié fonctionnellement aux moyens d'acheminement de ladite unité de pulvérisation, ledit système d'alimentation comprenant une pompe électrique, de préférence une pompe volumétrique, plus préférentiellement une pompe péristaltique, le cas échéant associée à un capteur de débit, permettant de refouler, avec un débit variable contrôlé, le liquide, provenant d'un réservoir, dans lesdits moyens d'acheminement et une interface de raccordement permettant audit système de recevoir le liquide provenant du réservoir,
- un support permettant de maintenir fixement la pompe électrique à proximité de l'unité de pulvérisation,
- une unité électronique de commande et/ou de contrôle, par exemple implantée sur une carte électronique, prévue pour commander et/ou contrôler le fonctionnement du système d'entraînement et du système d'alimentation en liquide en étant reliée fonctionnellement auxdits systèmes d'entraînement et d'alimentation en liquide,
- une interface de raccordement électrique permettant le raccordement du système d'entraînement, de l'unité électronique de commande et/ou de contrôle et du système d'alimentation en liquide à une source d'énergie électrique pour assurer leur alimentation électrique,

Un tel module de pulvérisation peut également être prévu pour être connecté dans un système de pulvérisation et de pilotage comprenant une pluralité de modules de pulvérisation et une unité centrale de pilotage. A cet effet, le module peut comprendre en outre une interface de communication permettant de connecter l'unité électronique de commande et/ou de contrôle à l'unité centrale, ceci afin de permettre le pilotage individuel à distance dudit module, indépendamment des autres modules, pour pouvoir adapter instantanément au moins un paramètre de pulvérisation.

Enfin, la présente invention a encore pour objet un système de pulvérisation et de pilotage destiné à être embarqué sur une machine ou un engin mobile, ledit système comprenant une pluralité de modules de pulvérisation pour la pulvérisation d'un liquide sous forme de gouttelettes pour le traitement d'une cible telle que par exemple une haie végétale, ledit liquide provenant d'un réservoir, se caractérisant essentiellement en ce qu'il comprend en outre un pupitre de commande comprenant une unité centrale électronique de pilotage, une interface homme machine, dite IHM, reliée à cette dernière, chaque module de pulvérisation consistant en un module de pulvérisation compact tel que défini selon la présente invention et en ce que l'unité centrale électronique de pilotage est reliée fonctionnellement à chaque module de pulvérisation de sorte à permettre un pilotage individuel à distance de chaque module de pulvérisation, indépendamment du ou des autres modules de pulvérisation, à partir dudit pupitre de commande pour régler individuellement les paramètres de pulvérisation et de fonctionnement de chaque module de pulvérisation.

Dans un tel système de pulvérisation et de pilotage selon l'invention, le pupitre de commande peut également comprendre au moins une interface d'entrée apte à recevoir des signaux de capteurs d'un système de détection tels qu'un signal représentatif de la présence ou de l'absence d'une cible, ou des paramètres caractérisant ladite cible, ou encore des paramètres fournis par le véhicule tracteur tels que sa vitesse ou son accélération.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la figure 1 montre une vue en perspective et en éclaté d'un module selon l'invention comprenant une unité de pulvérisation selon l'invention, à l'état monté de cette dernière, avec un atomiseur du type atomiseur rotatif dans une première forme de réalisation de ce dernier,
- la figure 2 représente une vue en coupe longitudinale du module représenté sur la figure 1 à l'état monté,
- la figure 3 montre une vue partielle en perspective et en éclaté partiel de l'unité de pulvérisation représentée sur la figure 1 à l'état non monté,
- la figure 4a montre une vue partielle en perspective de l'unité de pulvérisation représentée sur la figure 3 à l'état monté, avec la tuyère et le fuselage représentés partiellement de sorte à faire apparaître l'espace interne principal de la tuyère et l'espace interne secondaire du fuselage,
- la figure 4b montre l'unité de pulvérisation représentée sur la figure 4a, avec le fuselage 5 en entier,
- la figure 5 montre une vue en perspective de l'unité de pulvérisation représentée sur la figure 4, au niveau de son extrémité distale comprenant l'ouverture de sortie d'air, et dans une seconde forme de réalisation de l'atomiseur rotatif,
- la figure 6 montre une vue en perspective, avec arraché partiel de la pièce d'alimentation et de répartition et une vue en perspective de l'atomiseur rotatif, traversés axialement par l'arbre d'entraînement commun et représentés sur la figure 3,
- la figure 7 montre uniquement la pièce d'alimentation et de répartition, représentée sur la figure 6, du côté de son extrémité comportant les orifices d'alimentation,
- la figure 8 montre une vue en perspective d'une rampe de plusieurs modules d'un système de pulvérisation et de pilotage du type de module représenté sur la figure 1,
- la figure 9 montre une vue en perspective du module représenté sur la figure 1, à l'état monté et de projection du liquide sous la forme d'un pinceau de gouttelettes,
- la figure 10 montre une vue arrière d'un engin mobile portant une pluralité de modules, portés par des rampes, d'un système de pulvérisation et de pilotage selon l'invention,
- la figure 11 montre un schéma fonctionnel du système de pulvérisation et de pilotage selon l'invention,
- la figure 12 montre une vue partielle en coupe transversale selon A-A de l'unité de pulvérisation représentée sur la figure 2.

On peut voir sur les figures annexées une unité de pulvérisation pour la pulvérisation d'un liquide 18 sous forme de gouttelettes 18a pour le traitement d'une cible 21, telle que par exemple une haie végétale, ladite unité de pulvérisation comprenant une tuyère 1 formée par un conduit s'étendant le long d'un axe longitudinal X en délimitant intérieurement un espace interne principal 1c et étant ouvert à ses extrémités pour former une ouverture d'entrée d'air la et une ouverture de sortie d'air 1b. L'espace interne principal le reçoit au moins un atomiseur rotatif 3 monté en rotation autour d'un premier axe de rotation X1, des moyens d'acheminement 8, 9 pour acheminer le liquide, provenant d'un système d'alimentation avec un débit variable contrôlé, jusqu'à l'atomiseur rotatif 3, un ventilateur 2 comportant au moins une hélice 2a montée en rotation autour d'un second axe de rotation X2 et permettant de générer un flux d'air porteur dans l'espace interne principal 1c vers et au-delà de l'ouverture de sortie d'air 1b et un système d'entraînement 4, 4a à moteur(s) électrique(s) permettant d'assurer l'entraînement en rotation desdits atomiseur rotatif et hélice. L'atomiseur rotatif 3 comprend une surface de réception 3a prévue pour recevoir le liquide à débit variable contrôlé et pour assurer, à sa périphérie ou son extrémité 3b, à l'état de rotation dudit atomiseur rotatif, la fragmentation de la totalité dudit liquide reçu en gouttelettes propulsées par effet centrifuge dans le flux d'air porteur, et des moyens de raccordement 6 à une source d'énergie électrique 22 pour fournir l'énergie électrique au système d'entraînement 4, 4a.

Le liquide 18 est aussi communément appelé bouillie dans le métier de la viticulture,

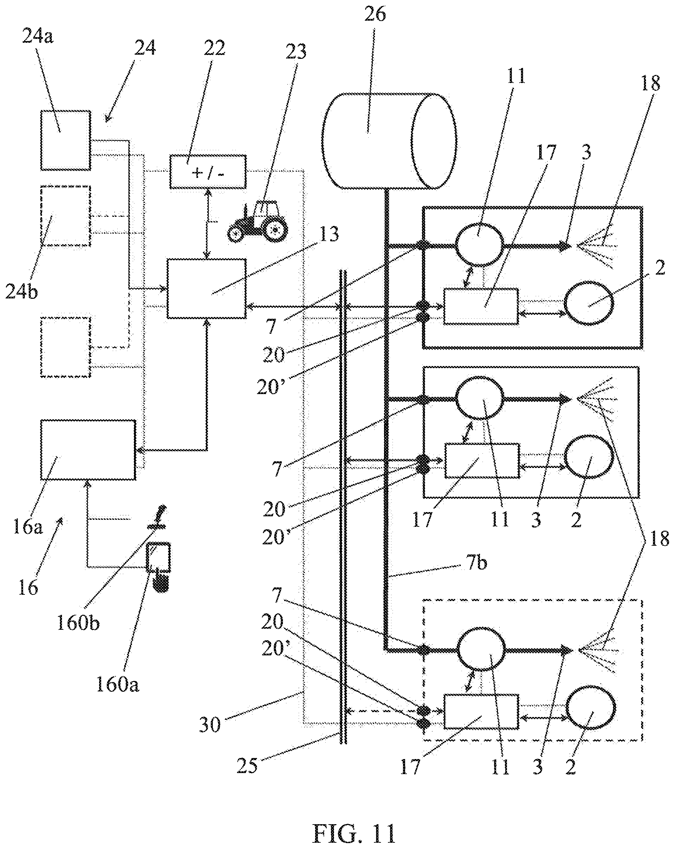

La source d'énergie électrique 22 peut consister, par exemple, en une génératrice électrique accouplée à un engin mobile 23 tel qu'un véhicule tracteur, l'énergie étant distribuée par un réseau d'alimentation électrique 30 (Figure 11).

Conformément à la présente invention, une telle unité de pulvérisation comprend en outre un fuselage 5 interne présentant un profil aérodynamique défini par une surface latérale 5a délimitant intérieurement un espace interne secondaire 5b et étant maintenu sensiblement coaxialement dans l'espace interne principal 1c entre le ventilateur 2 et la sortie d'air 1b de sorte à définir, entre le fuselage 5 et la tuyère 1, un canal annulaire de circulation du flux d'air porteur entourant ledit fuselage.

Toujours conformément à la présente invention, le fuselage 5 comprend un tronçon rotatif formé par l'atomiseur rotatif 3 de sorte que la périphérie ou l'extrémité 3b de la surface de réception 3a s'inscrit sensiblement dans la surface latérale du fuselage 5 tout en permettant la rotation de l'atomiseur rotatif 3 et la propulsion par effet centrifuge, de préférence dans une direction sensiblement perpendiculairement à l'axe longitudinal X, des gouttelettes dans ledit canal pour être incorporées dans le flux d'air.

Le fuselage 5 comprend un tronçon rotatif formé par l'atomiseur rotatif 3 de sorte que la périphérie ou l'extrémité 3b, de préférence lisse, de la surface de réception 3a s'inscrit sensiblement dans la surface latérale du fuselage 5 tout en permettant la rotation de l'atomiseur rotatif 3 et la propulsion, de préférence sensiblement perpendiculairement à l'axe longitudinal X, des gouttelettes dans ledit canal.

Un tel canal annulaire de circulation du flux d'air peut alors entourer concentriquement le fuselage 5 le long de l'axe longitudinal X de la tuyère 1.

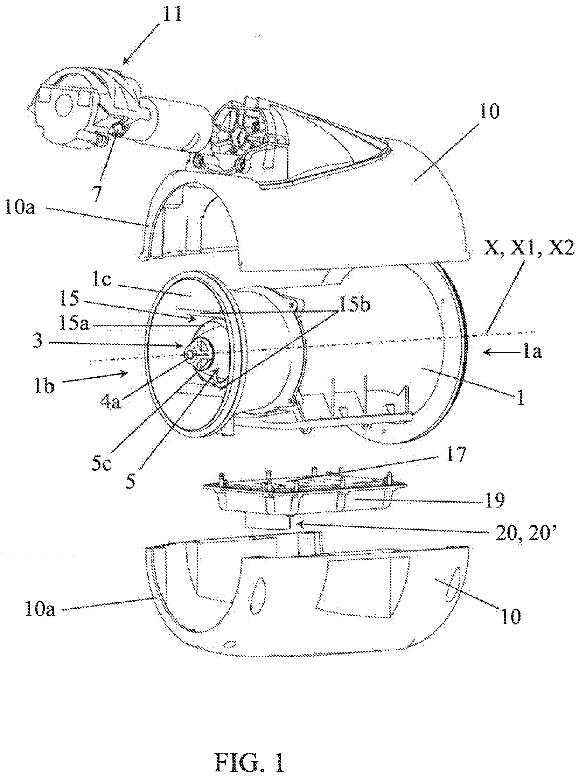

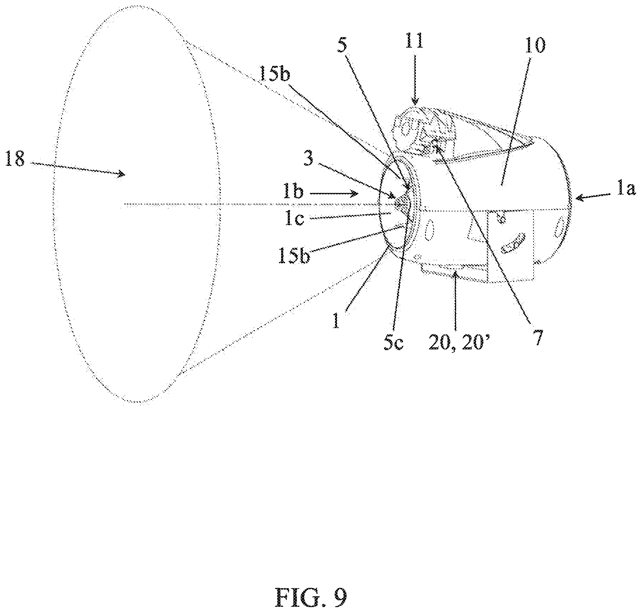

Les moyens d'acheminement 8, 9 recevant le liquide pour alimenter l'atomiseur rotatif 3 dans l'unité de pulvérisation peuvent être prévus pour être raccordés à un système d'alimentation en liquide 7, 11, 8, 9 qui peut comprendre une pompe électrique 11 et une interface de raccordement hydraulique 7 permettant à cette dernière de recevoir le liquide contenu dans un réservoir 26 (figures 1, 2, 9, 11).

A l'état de fonctionnement de l'unité de pulvérisation, l'atomiseur rotatif 3, plus particulièrement la périphérie ou l'extrémité 3b de la surface de réception 3a rotative peut ainsi être entouré entièrement par le flux d'air porteur généré par le ventilateur 2 de sorte à pouvoir projeter toutes les gouttelettes dans le canal annulaire de circulation du flux d'air porteur et à des distances variables entre le fuselage 5 et la tuyère 1 en fonction de la taille et de la géométrie des gouttelettes décrochées de la périphérie 3b de l'atomiseur rotatif 3 (voir notamment les figures 1, 2, 4a, 4b, 5, 9), ce qui a pour effet d'assurer leur mélange homogène dans ledit flux d'air qui les portera alors vers la cible (par exemple de la végétation) sous la forme d'un pinceau de traitement. L'atomiseur rotatif 3 peut être disposé à proximité de l'ouverture de sortie d'air 1b.

Ainsi, le fait que la périphérie ou l'extrémité 3b de la surface de réception 3a de l'atomiseur rotatif 3, soit inscrite dans la surface latérale du fuselage et que l'atomiseur rotatif 3 forme une partie ou un tronçon mobile du fuselage 5 avec un profil aérodynamique permet, d'une part, de favoriser l'écoulement du flux d'air porteur autour de l'atomiseur rotatif 3 en limitant le nombre d'obstacles dans le flux d'air porteur ainsi que les turbulences générées par ce dernier en sortie de tuyère 1 et, d'autre part, de faciliter l'incorporation des gouttelettes dans le flux d'air porteur pour les porter jusqu'à la cible 21. L'absence de dépôt et de gouttes de liquide sur la paroi interne de la tuyère 1 en sortie de module permet en outre de vérifier l'intégration de l'ensemble des gouttelettes au flux d'air porteur.

On notera que le fuselage 5, en dehors du tronçon rotatif formé par l'atomiseur rotatif 3, peut être réalisé en plusieurs parties ou tronçons assemblées l'un(e) à l'autre, de préférence de manière amovible ou démontable, par exemple pour pouvoir accéder aux différents éléments contenus dans l'espace interne secondaire 5b du fuselage 5 afin de réaliser leur changement ou leur maintenance.

L'hélice 2a du ventilateur 2 génère le flux d'air porteur lors de sa rotation et par aspiration de l'air ambiant par l'ouverture d'entrée d'air la.

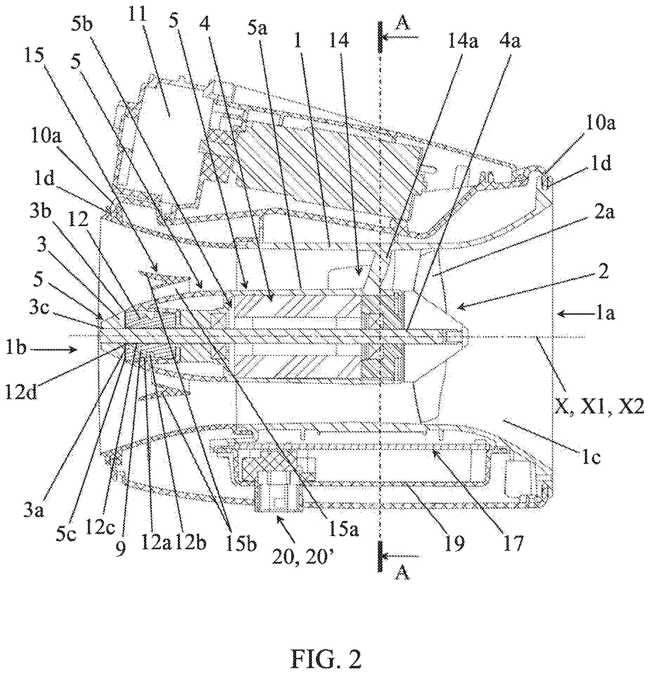

De préférence, les premier et second axes de rotation X1, X2 respectifs de l'atomiseur rotatif 3 et de l'hélice 2a peuvent être confondus ou sensiblement confondus entre eux et, de préférence, confondus ou sensiblement confondus avec l'axe longitudinal X de la tuyère (figures 2, 3, 4a, 4b). Cette caractéristique est intéressante pour limiter l'encombrement de la tuyère dans le plan perpendiculaire à l'axe commun.

De préférence, le système d'entraînement 4, 4a peut être logé dans l'espace interne secondaire 5b du fuselage 5, ceci afin d'empêcher que le flux d'air porteur ne soit perturbé par le système d'entraînement 4, 4a.

Le système d'entraînement 4, 4a peut comprendre au moins un moteur électrique 4, de préférence un moteur sans balais dit moteur brushless, et au moins un arbre d'entraînement 4a permettant l'entraînement en rotation de l'atomiseur rotatif 3 autour du premier axe de rotation X1 et de l'hélice 2a autour du second axe de rotation X2 (figures 2, 3, 4a, 4b).

De préférence, comme on peut le voir sur les figures 2, 3, 4a, le système d'entraînement peut comprendre un unique moteur électrique 4 commun et un unique arbre d'entraînement 4a commun actionné en rotation autour de son axe X1, X2 par ledit moteur électrique. En outre, le moteur électrique 4 et l'arbre d'entraînement 4a communs peuvent permettre d'assurer à la fois la rotation de l'hélice 2a autour du second axe de rotation X1 et la rotation de l'atomiseur rotatif 3 autour du premier axe de rotation X2. Les premier et second axes de rotation X1, X2 peuvent alors être confondus de sorte à renforcer ou à améliorer la compacité de l'unité de pulvérisation selon cet axe et partant du module de pulvérisation selon l'invention décrit ci-après. La déposante a réalisé de nombreux tests montrant que la plage de variation de vitesse de rotation de l'hélice 2a générant le flux d'air porteur, conjuguée avec la taille des gouttelettes obtenue par l'atomiseur rotatif 3 dans cette plage présentait des caractéristiques de réglage satisfaisante et sans commune mesure avec les technologies existantes. Ainsi, le mode de réalisation basé sur un système d'entrainement à moteur électrique commun a pour effet de simplifier la réalisation et la gestion du module tout en augmentant sa compacité et sa fiabilité. Il a été démontré aussi que l'atomiseur rotatif avait la capacité de transformer en gouttelettes un débit de liquide pouvant varier sur une très large plage, sans commune mesure là aussi avec les solutions existantes, et l'intégralité des gouttelettes étant mélangées dans ce cas de façon assez homogène dans le flux d'air sans constater de perte de liquide par égouttage. De plus, la déposante a noté dans les essais conduits dans le domaine de la viticulture des gains de consommation énergétiques très importants par rapport aux principales technologies utilisées à ce jour.

Plus particulièrement, le cas échéant, le moteur sans balais présente les avantages d'une vitesse de rotation rapide, de préférence plus de 15000 tr/min., d'une faible inertie pour assurer des changements de vitesse de rotation rapides et d'une faible masse.

Le fuselage 5 peut comprendre au moins un tronçon de refroidissement entourant le ou les moteurs électriques 4 et étant en contact avec le flux d'air porteur pour évacuer par ledit contact une partie de la chaleur générée par le ou les moteurs électriques. Le ou chaque tronçon peut être réalisé en aluminium ou autre matériau favorisant le refroidissement ou limitant l'échauffement du ou des moteurs électriques 4 disposé(s) dans ce tronçon de fuselage 5.

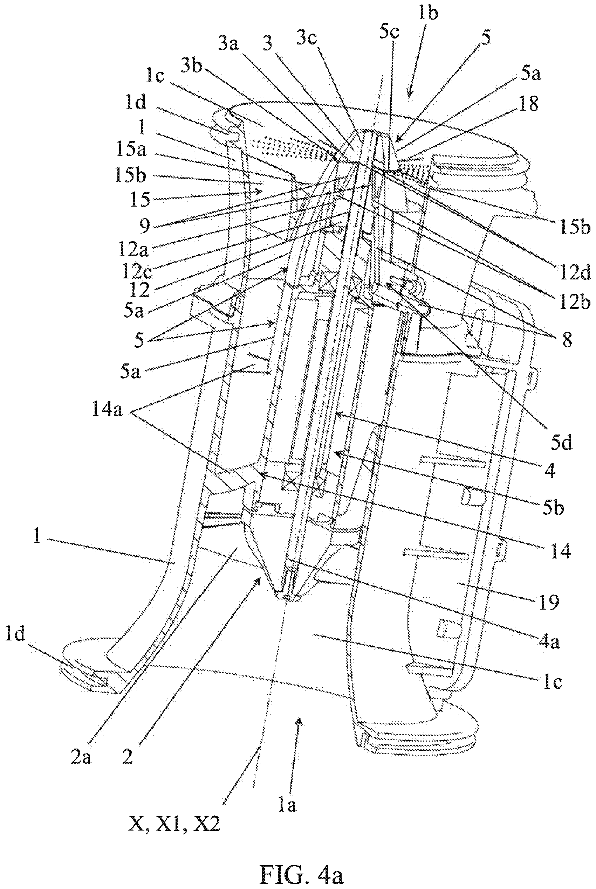

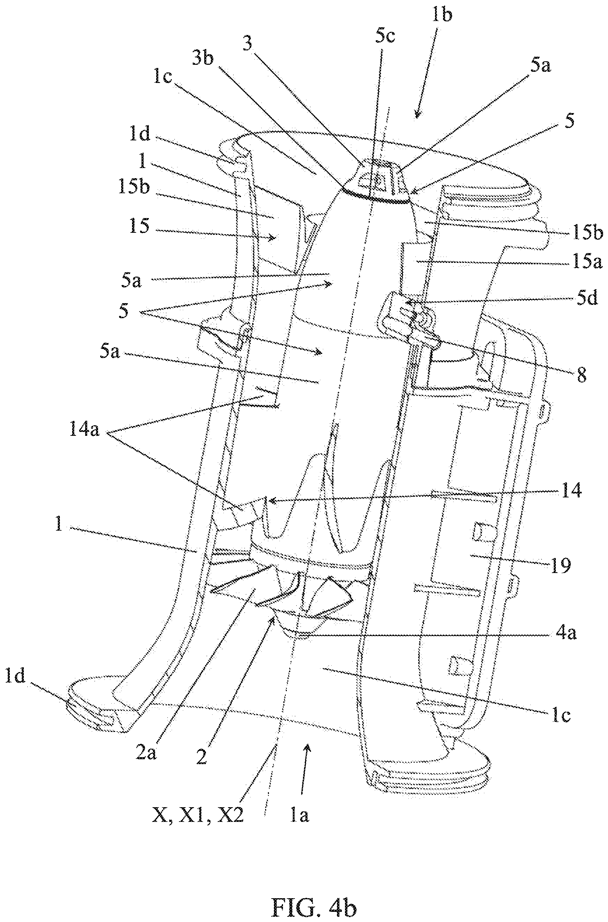

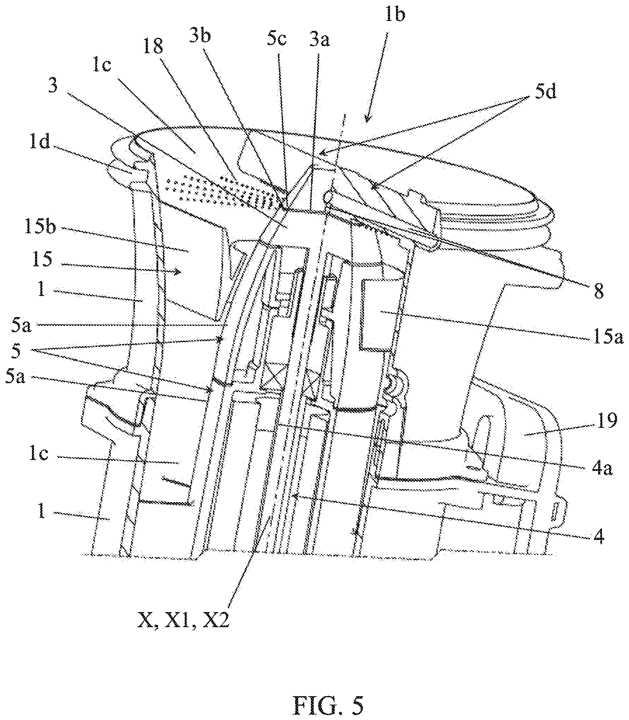

La surface de réception 3a de l'atomiseur rotatif 3 peut s'étendre dans un plan sensiblement perpendiculaire à l'axe longitudinal X de la tuyère 1, ceci de sorte à pouvoir éjecter les gouttelettes dans une direction sensiblement perpendiculaire à l'axe longitudinal X de la tuyère 1 et à des distances différentes entre le fuselage et la tuyère selon leur forme et leur masse où elles seront alors déviées par le flux d'air porteur pour être incorporées de façon sensiblement homogène à ce dernier, comme le montrent de façon théorique les figures 4a et 5 qui ne tiennent pas compte dans ce cas de leur prise en compte et de leur déviation par le flux d'air porteur.

Dans une forme de réalisation préférentielle, l'atomiseur rotatif 3 peut présenter globalement une forme de disque ou de pièce tronconique ou conique et au moins l'une des faces externes du disque ou de la pièce tronconique ou conique peut former la surface de réception 3a (figures 2, 3, 4a, 5, 6).

La section du fuselage 5 et/ou de la tuyère 1 peut être variable, en dimensions et/ou en forme, le long de son axe longitudinal, comme on peut le voir sur les figures 2, 3, 4a, 4b et 5. Par exemple la section de la tuyère 1 peut être prévue pour être élargie au niveau de ses ouvertures d'entrée et de sortie d'air 1a, 1b. De préférence, l'ouverture de sortie d'air 1b peut présenter une forme ovale. Ainsi, le pinceau de gouttelettes obtenu en sortie de tuyère, peut présenter une forme ovale et sensiblement aplatie au niveau de la végétation. Une telle forme ovale est particulièrement efficace pour obtenir un pinceau homogène, en combinaison, le cas échéant, avec le dispositif diffuseur 15.

L'atomiseur rotatif 3 peut être percé centralement et axialement par un alésage 3c pour permettre le passage de l'arbre d'entraînement 4a permettant sa rotation autour du premier axe de rotation X1 (figures 2, 3, 4a, 6) via une liaison d'entraînement telle que par exemple une liaison par goupilles, clavettes, cannelures ou dentures, ou, comme on peut le voir sur les figures 1, 3, 4a, 4b, 6 par pincement ou coincement sur l'arbre d'entraînement 4a ou emmanchement en force de ce dernier dans l'alésage 3c. L'arbre d'entraînement 4a peut également être prévu, dans une variante, en étant réalisé en une seule pièce avec l'atomiseur rotatif 3 (figure 5).

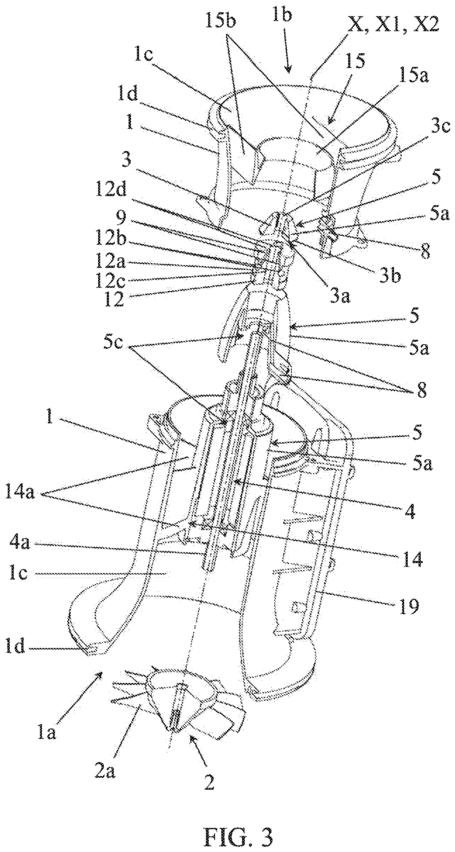

Dans une forme de réalisation préférentielle des moyens d'acheminement 8, 9, on peut voir, notamment sur les figures 3, 4a, 4b et 5, que ceux-ci peuvent comprendre un conduit d'alimentation principal 8 prévu pour recevoir le liquide provenant du système d'alimentation en liquide 7, 11 et pour alimenter en liquide, directement ou indirectement, en au moins un point d'alimentation, la surface de réception rotative 3a. En outre, le fuselage 5 peut comprendre une extension latérale d'alimentation en liquide 5d pouvant présenter un profil aérodynamique et dans laquelle peut passer au moins une partie du conduit d'alimentation principal 8 intégrée ou rapportée dans ladite extension. L'extension latérale d'alimentation en liquide 5d peut être prévue pour pouvoir s'étendre transversalement, de préférence sensiblement perpendiculairement, à l'axe longitudinal X de la tuyère 1 dans le canal annulaire de circulation du flux d'air porteur.

Si on se réfère aux figures 2, 3, 4a, 6 et7, on peut voir que dans le cas où un tel conduit d'alimentation principal 8 est prévu pour alimenter en liquide indirectement la surface de réception 3a, l'invention peut prévoir que les moyens d'acheminement 8, 9 puissent comprendre en outre à cet effet au moins deux conduits d'alimentation secondaires 9 prévus chacun pour être raccordés audit conduit d'alimentation principal 8 et être situés dans l'espace interne secondaire 5b du fuselage 5. L'unité de pulvérisation peut comprendre en outre une pièce intermédiaire d'alimentation et de répartition 12 pouvant comporter les conduits d'alimentation secondaires 9 et pouvant être disposée dans l'espace interne secondaire 5b du fuselage 5 entre, d'une part, le ventilateur 2, le cas échéant le moteur électrique 4, et, d'autre part, l'atomiseur rotatif 3, à proximité immédiate de ce dernier de sorte que chaque conduit d'alimentation secondaire 9 puisse déboucher à l'écart du flux d'air porteur en regard et à proximité immédiate de la surface de réception 3a pour l'alimenter en liquide en au moins deux points d'alimentation, de préférence répartis de part et d'autre du premier axe de rotation X1, le cas échéant de part et d'autre de l'arbre d'entraînement 4a permettant d'assurer la rotation de la surface de réception 3a autour du premier axe de rotation X1.

La rotation à grande vitesse de l'atomiseur rotatif 3, et partant de sa surface de réception 3a, a pour effet de répartir, en dehors du flux d'air porteur, le liquide reçu par cette dernière jusqu'à la périphérie ou l'extrémité 3b de ladite surface de réception 3a, c'est-à-dire jusque la ou l'une des arêtes formant sa périphérie ou son extrémité, où le liquide sera fragmenté en gouttelettes qui seront alors projetées immédiatement par effet centrifuge dans le flux d'air porteur entourant l'atomiseur rotatif 3 et notamment la périphérie ou l'extrémité de sa surface de réception 3a rotative.

Si on se réfère à nouveau aux figures 2, 3, 4a, 6 et 7, on peut voir que la pièce intermédiaire d'alimentation et de répartition 12 peut comprendre une gorge annulaire 12a de répartition du liquide qui peut comporter au moins deux orifices 12b débouchant chacun dans l'un des conduits d'alimentation secondaires 9. En outre, le conduit d'alimentation principal 8 peut être prévu pour déboucher dans la gorge annulaire 12a qui peut assurer ainsi la distribution du liquide, acheminé depuis la pompe électrique 11 par le conduit d'alimentation principal 8, dans les conduits d'alimentation secondaires 9.

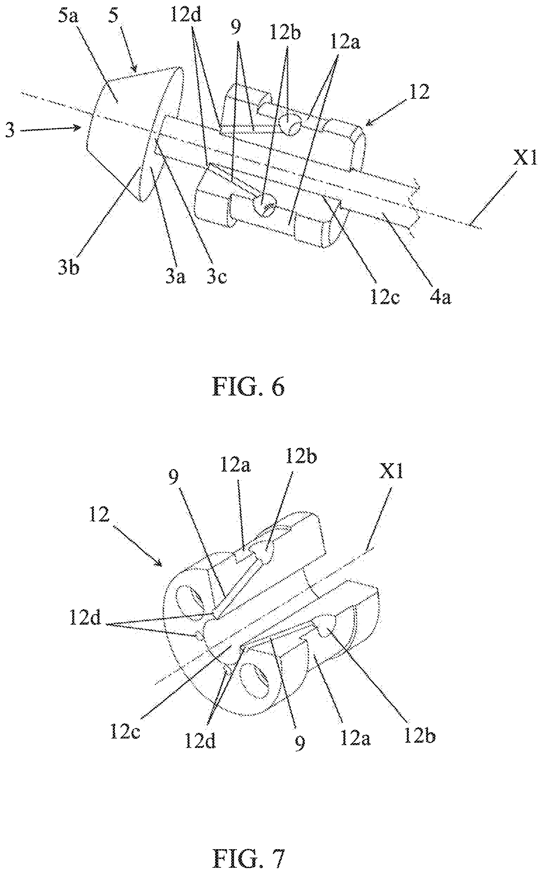

De préférence, comme on peut le voir notamment sur les figures 6 et 7, la pièce intermédiaire d'alimentation et de répartition 12 peut présenter une forme globalement cylindrique et peut être percée à l'une de ses faces d'extrémité, qui peut être orientée par exemple en étant tournée vers l'ouverture de sortie ou d'entrée d'air la ou 1b de la tuyère 1, par au moins deux trous d'alimentation 12d formant respectivement les points d'alimentation en liquide. En outre, la gorge annulaire 12a de répartition peut être pratiquée dans la face latérale externe de la pièce d'alimentation et de répartition 12 et les conduits d'alimentation secondaires 9 peuvent être pratiqués dans la matière de la pièce intermédiaire d'alimentation et de répartition 12 de sorte à déboucher à l'une de leurs extrémités dans la gorge annulaire 12a et à leur autre extrémité dans l'un desdits trous d'alimentation. D'autre part, le fuselage 5 peut être conçu dans sa partie recevant la pièce intermédiaire d'alimentation et de répartition 12 pour entourer la gorge annulaire en assurant une étanchéité fluidique avec cette dernière.

La pièce intermédiaire d'alimentation et de répartition 12 peut être traversée axialement par un alésage de passage 12c permettant le passage de l'arbre d'entraînement 4a entraînant en rotation l'atomiseur rotatif 3 (figures 2, 3, 4a, 6 et 7) au moyen d'une liaison d'entraînement non représentée.

Le fuselage 5 s'étend longitudinalement ou axialement entre deux extrémités dont l'une, dite extrémité distale, est, à l'état monté dans la tuyère 1, la plus éloignée du ventilateur 2 ou la plus proche de l'ouverture de sortie 1b et l'autre, dite extrémité proximale, est la plus éloignée de l'ouverture de sortie 1b. Dans un mode de réalisation préférentiel de la position axiale ou longitudinale du tronçon rotatif du fuselage 5 formé par l'atomiseur rotatif 3, l'invention peut prévoir que le tronçon rotatif puisse former l'extrémité distale du fuselage 5 (figures 1, 2, 3, 4a, 4b, 5, 9).

Comme on peut le voir sur les figures 1, 2, 3, 4a, 4b et 5 la surface latérale 5a du fuselage 5 peut être fermée ou ajourée, continue ou discontinue. De préférence, afin de procurer une efficacité accrue de l'écoulement du flux d'air le long du fuselage 5 au moins jusqu'à son tronçon rotatif formé par l'atomiseur rotatif 3, la surface latérale 5a peut être fermée, c'est-à-dire continue, le long du fuselage 5 au moins entre, d'une part, son extrémité proximale et, d'autre part, l'atomiseur rotatif 3 ou une zone située à proximité de ce dernier.

Dans une première forme de réalisation du fuselage 5, comme on peut le voir sur les figures 1, 2, 3, 4a, 4b, 9, la surface de réception 3a de l'atomiseur rotatif 3 peut être située dans l'espace interne secondaire 5b et la continuité axiale ou longitudinale de la surface latérale 5a du fuselage 5 peut être interrompue par une fente de passage 5c transversale permettant la propulsion des gouttelettes dans le flux d'air porteur à travers la surface latérale 5a du fuselage 5. La fente de passage 5c peut être délimitée par deux bords périphériques externes en vis-à-vis et l'un desdits bords périphériques externes peut être formé par la périphérie ou l'extrémité 3b de la surface de réception 3a. La fente de passage permet en outre lors d'un arrêt de l'alimentation du liquide de stopper immédiatement la diffusion des gouttelettes en conservant le liquide par effet de capillarité à l'intérieur de l'espace interne secondaire 5b, effet de capillarité généré essentiellement par la proximité des bords périphériques de la fente de passage 5c au niveau de la surface latérale 5a du fuselage. Elle autorise de fait, dès reprise de l'alimentation en liquide la génération de gouttelettes par effet centrifuge au niveau de l'extrémité 3b de la surface de réception 3a. Dans cette première forme de réalisation du fuselage 5, l'atomiseur rotatif 3 peut présenter une forme d'ogive ou conique ou tronconique avec une face d'extrémité externe pouvant être située dans un plan sensiblement perpendiculaire à l'axe longitudinal X de la tuyère 1 et pouvant être tournée vers l'ouverture d'entrée la de la tuyère 1. Une telle face d'extrémité externe peut former la surface de réception 3a de l'atomiseur rotatif.

Dans une deuxième forme de réalisation du fuselage 5, comme on peut le voir sur la figure 5, la surface de réception 3a de l'atomiseur rotatif 3 peut être située à l'extérieur de l'espace interne secondaire 5b. Plus particulièrement, l'extrémité distale du fuselage 5 peut se terminer par une face d'extrémité externe s'étendant dans un plan sensiblement perpendiculaire à l'axe longitudinal de la tuyère 1 et étant tournée vers l'ouverture de sortie d'air 1b. Une telle face d'extrémité externe peut former la surface de réception 3a de l'atomiseur rotatif 3 (figure 5). Dans ce cas, l'espace interne secondaire 5b peut être vide, partiellement vide ou plein.

Comme on peut le voir notamment sur les figures 3, 4a, 4b et 5, le fuselage 5 peut comprendre une extension latérale d'alimentation en liquide 5d qui peut présenter avantageusement un profil aérodynamique et dans laquelle peut être pratiquée un canal d'alimentation du liquide pouvant former au moins en partie le conduit d'alimentation principal 8. En outre, l'extension latérale d'alimentation en liquide 5d peut s'étendre transversalement, de préférence perpendiculairement, à l'axe longitudinal de la tuyère 1 dans le canal annulaire de circulation du flux d'air porteur.

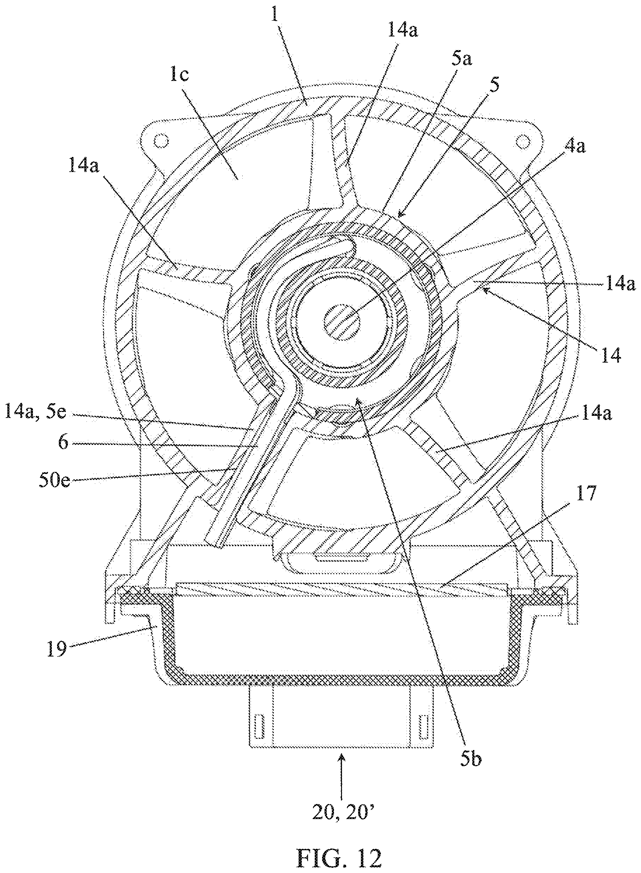

Comme on peut le voir également sur la figure 12, l'unité de pulvérisation peut comprendre en outre des fils électriques 6 permettant d'alimenter en courant électrique le ou chaque moteur électrique 4 et le fuselage 5 peut comprendre une extension latérale d'alimentation électrique 5e pouvant présenter avantageusement un profil aérodynamique. En outre, l'extension latérale d'alimentation électrique 5e peut s'étendre transversalement, de préférence perpendiculairement, à l'axe longitudinal X de la tuyère 1 et peut être traversée par un canal d'alimentation électrique 50e formant un passage pour les fils électriques 6 dans le canal annulaire de circulation du flux d'air porteur. Dans le cas où l'unité de pulvérisation comprend une extension latérale d'alimentation en liquide 5d, l'extension latérale d'alimentation électrique 5e peut être prévue de sorte à être diamétralement opposée à l'extension latérale d'alimentation en liquide 5d.

D'autre part, si on se réfère aux figures 2, 3, 4a, 4b, 5, on peut voir que, de sorte à pouvoir redresser le flux d'air porteur, présentant une forme hélicoïdale à la sortie de l'hélice 2a, dans l'axe de la tuyère 1 avant son contact avec les gouttelettes, la présente invention peut prévoir que l'unité de pulvérisation puisse comprendre en outre un dispositif redresseur 14 s'étendant dans le canal annulaire de circulation du flux d'air porteur et pouvant être disposé axialement entre le ventilateur 2 et l'atomiseur rotatif 3. De préférence le dispositif redresseur 14 peut être situé à proximité du ventilateur 2. Ainsi, grâce à un tel dispositif redresseur, il est possible d'obtenir en aval de ce dernier, un flux d'air porteur cohérent organisé en vitesse et direction sensiblement dans l'axe de la tuyère 1 de façon non laminaire pour un meilleur rendement énergétique avant son contact avec les gouttelettes.

Un tel dispositif redresseur 14 peut comprendre une pluralité d'éléments redresseurs 14a tels que des aubes, chaque aube 14a pouvant s'étendre entre deux bords d'extrémité dont l'un peut être fixé sur le fuselage 5, c'est-à-dire sur la face externe de sa surface, ou paroi, latérale 5a, et l'autre peut être fixé sur la tuyère 1, c'est-à-dire sur la face interne de cette dernière. L'ensemble ou la pluralité des éléments redresseurs 14 peut être réalisé(e) en une seule pièce, par exemple de façon combinée avec une partie de la tuyère let une partie de la paroi du fuselage 5a

Dans une forme de réalisation avantageuse, comme on peut le voir notamment sur la figure 12, le dispositif redresseur 14 peut comprendre l'extension latérale d'alimentation en liquide 5d et/ou l'extension latérale d'alimentation électrique 5e. Le cas échéant, comme on peut le voir sur cette figure 12, l'un des éléments redresseurs 14a peut comprendre l'extension latérale d'alimentation électrique 5e et/ou l'extension latérale d'alimentation en liquide 5d.

Par ailleurs, si on se réfère à nouveau aux figures 2, 3, 4a, 4b, 5, on peut voir que l'unité de pulvérisation peut comprendre en outre un dispositif diffuseur 15 s'étendant dans le canal annulaire de circulation du flux d'air porteur et que le dispositif diffuseur 15 peut être disposé axialement entre le ventilateur 2 et l'atomiseur rotatif 3, de préférence à proximité de la surface de réception 3a.

Dans un mode de réalisation préférentiel (figures 2, 3, 4a, 4b, 5), le dispositif diffuseur 15 peut comprendre au moins trois éléments diffuseurs 15a, 15b, dont l'un, dit diffuseur central 15a, peut consister en une pièce creuse centrale de forme globalement cylindrique ou tronconique entourant le fuselage 5, tandis que les autres éléments diffuseurs, dits diffuseurs latéraux 15b, de préférence deux autres éléments diffuseurs, peuvent présenter chacun une forme d'aile aérodynamique s'étendant transversalement à l'axe dudit élément diffuseur 15a et être fixés sur la face latérale externe du diffuseur central 15a, de préférence en étant répartis de façon diamétralement opposée. Un tel dispositif diffuseur 15 a pour effet d'organiser de façon conjuguée avec l'ouverture de sortie d'air 1b de la tuyère 1, le mélange des gouttelettes issues de l'atomiseur rotatif 3, notamment de sa surface de réception 3a tout en conservant les caractéristiques du flux d'air porteur cohérent et non linéaire issu du ventilateur 2 et du dispositif redresseur 14, et de les porter de façon homogène sous la forme d'un pinceau au niveau de la cible (par exemple de la végétation).

La fixation et le maintien du dispositif diffuseur 15 peut être réalisé, de préférence, en le fixant, par exemple par l'intermédiaire des éléments diffuseurs 15b en forme d'aile, sur la face interne de la tuyère 1 et/ou sur la face externe du fuselage 5 (figures 2, 3, 4a, 4b, 5).

Une telle unité de pulvérisation permet d'obtenir une combinaison efficace de l'injection des gouttelettes, de préférence selon une direction dans un plan ou une surface de projection sensiblement vertical(e) à l'axe longitudinal X de la tuyère 1, dans un flux d'air porteur avec une vitesse élevée et adaptée. En effet, si la vitesse du flux d'air porteur est trop faible, une partie des gouttelettes peut être projetée sur la paroi interne de la tuyère 1 ce qui génère un égouttage et une perte de liquide vers la cible 21 et si la vitesse du flux d'air porteur est trop élevée, le pinceau formé par celui-ci en sortie de tuyère 1 est alors trop focalisé et étroit, ce qui ne permet pas un mélange des gouttelettes dans tout le flux d'air en sortie de tuyère 1. Dans la présente invention, les gouttelettes sont projetées dans le flux d'air porteur à l'intérieur de la tuyère 1, c'est-à-dire dans son espace principal le, de sorte que leur diffusion dans le flux d'air porteur n'est pas perturbée par l'atmosphère extérieure contrairement par exemple au système décrit dans le document US6152382.

La présente invention a également pour objet un module de pulvérisation compact pour la pulvérisation d'un liquide sous forme de gouttelettes pour le traitement d'une cible 21, telle que par exemple une haie végétale.

Conformément à l'invention, un tel module, comme on peut le voir notamment sur les figures 1, 2, 8, 9 et 10 comprend :
- une unité de pulvérisation selon l'invention telle que décrite précédemment,
- son propre système d'alimentation en liquide 7, 11 relié fonctionnellement aux moyens d'acheminement 8, 9 de ladite unité de pulvérisation, ledit système d'alimentation comprenant une pompe électrique 11 permettant de refouler, avec un débit variable contrôlé, le liquide, provenant d'un réservoir 26, dans lesdits moyens d'acheminement et une interface de raccordement hydraulique 7 permettant audit système de recevoir le liquide provenant du réservoir 26,
- un support 10 permettant de maintenir fixement la pompe électrique 11 à proximité de l'unité de pulvérisation,
- une unité électronique de commande et/ou de contrôle 17, par exemple implantée sur une carte électronique, permettant de commander et/ou contrôler le fonctionnement du système d'entraînement 4, 4a et du système d'alimentation en liquide en étant reliée fonctionnellement auxdits systèmes d'entraînement et d'alimentation en liquide,
- une interface de raccordement électrique 20' permettant le raccordement du système d'entraînement 4, 4a, du système d'alimentation en liquide, notamment de la pompe électrique 11 et de l'unité électronique de commande et/ou de contrôle 17 à une source d'énergie électrique 22 pour assurer leur alimentation électrique.

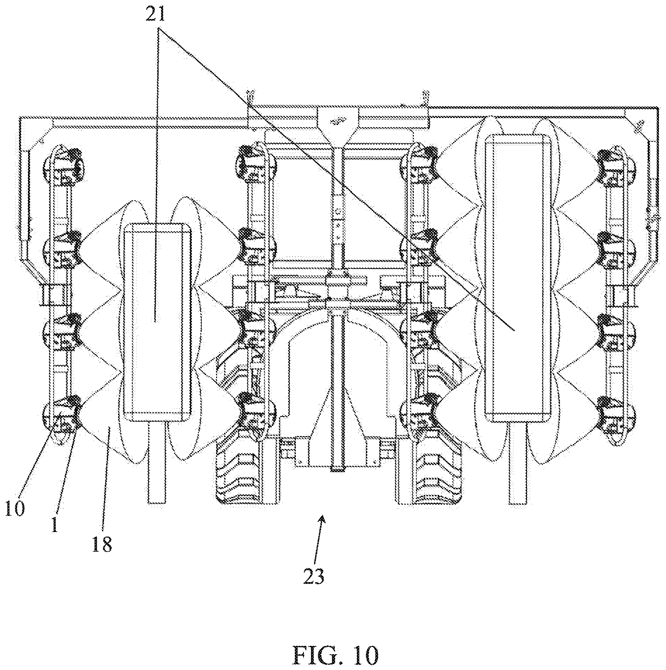

Le réservoir 26 est situé, préférentiellement, en dehors et à distance du module, par exemple en étant monté sur une machine ou un engin mobile 23 supportant au moins un module selon l'invention (figure 10).

L'unité de pulvérisation, plus particulièrement par l'intermédiaire de la tuyère 1, peut être fixée sur le support 10. Un tel support 10 peut être réalisé en deux parties, par exemple globalement semi cylindriques, assemblées l'une à l'autre de sorte à permettre un montage et un démontage aisés du support 10 et des parties du modules fixées, le cas échéant de manière amovible, à ce dernier.

La pompe électrique 11, le cas échéant associée à un capteur de débit, est apte à délivrer, sous la commande et/ou le contrôle de l'unité électronique de commande et de contrôle 17, via les moyens d'acheminement 8, 9, un débit variable contrôlé au niveau de l'atomiseur rotatif 3 et peut consister de préférence en une pompe volumétrique, plus préférentiellement en une pompe péristaltique. Les avantages d'une pompe volumétrique, et notamment d'une pompe péristaltique sont de délivrer un débit de liquide précis dépendant de la vitesse de rotation de la pompe sous une pression peu différente de ou sensiblement égale à la pression atmosphérique et sans l'assistance d'un capteur de débit. Ainsi, l'arrêt en rotation instantané de la pompe, ne génère pas de pression résiduelle dans le circuit aval évitant ainsi la coulure intempestive de liquide au niveau de l'atomiseur rotatif 3. De même, la précision obtenue par ce type de pompe évite de positionner un capteur de débit supplémentaire dans le système d'alimentation. Et enfin, la plage de vitesse de rotation possible de la pompe entraine de fait la possibilité de faire varier son débit dans une plage importante. Dans ce cas, une consigne de débit peut être fournie à la pompe péristaltique par un logiciel ou un opérateur et peut être traduite directement en consigne de vitesse de rotation de la pompe péristaltique.

Si on se réfère à la figure 11, on peut voir l'unité électronique de commande et/ou de contrôle 17 peut comprendre un microprocesseur et une mémoire pouvant contenir des codes représentatifs des paramètres de pulvérisation à régler et/ou un code d'identification dudit module, ainsi qu'un bus de communication interne vers les organes du module (système d'alimentation en liquide, système d'entrainement à moteur électrique, ...).

Le microprocesseur de l'unité de commande et de contrôle 17 peut être prévu pour déterminer au moins l'une des informations de contrôle suivantes :
- une information de température et/ou une information de courant/tension et/ou une information de vitesse relative(s) au fonctionnement du système d'entraînement à moteur électrique 4, 4a (ventilateur et/ou atomiseur rotatif),
- une information de température et/ou une information de courant/tension et/ou une information de vitesse relative(s) au fonctionnement de la pompe électrique 11,
- une information relative au code d'identification Id dudit module de pulvérisation.

Le microprocesseur peut encore être prévu pour recevoir de l'unité centrale électronique de pilotage 13 au moins l'une des informations de consigne suivantes :
- une information de consigne relative au fonctionnement du système d'entraînement 4, 4a,
- une information de consigne relative au fonctionnement de la pompe électrique 11.

Dans une utilisation préférentielle et dans un mode de réalisation préférentiel d'un tel module, celui-ci peut être prévu pour être connecté dans un système de pulvérisation et de pilotage comprenant une pluralité de modules de pulvérisation et un pupitre de commande 16 (figures 10, 11). A cet effet, le module peut comprendre en outre une interface de communication individuelle 20 permettant de connecter l'unité de commande et/ou de contrôle électronique 17 au pupitre de commande 16 par l'intermédiaire d'un bus de communication 25, ceci afin de permettre, à partir de ce dernier, le pilotage individuel à distance dudit module, indépendamment des autres modules, pour pouvoir adapter instantanément au moins un paramètre de pulvérisation.

Les moyens de raccordement 6, pouvant comprendre des fils électriques, peuvent être prévus pour relier fonctionnellement l'unité électronique de commande et/ou de contrôle électronique 17, le système d'entraînement 4, 4a et la pompe électrique 11, par l'intermédiaire de l'interface de raccordement électrique 20', à la source d'énergie électrique 22 par l'intermédiaire d'un réseau électrique 30. D'autre part de tels moyens de raccordement 6 peuvent également comprendre des fils électriques permettant de relier fonctionnellement l'unité électronique de commande et/ou de contrôle 17, par l'intermédiaire de l'interface de communication individuelle 20, au pupitre de commande 16.

De préférence, comme on peut le voir sur les figures 1, 2, 9 et 12 l'interface de raccordement électrique 20' et l'interface de communication individuelle 20 peuvent être situées en un même point dans le module se présentant par exemple sous la forme d'un connecteur multivoies.

L'interface de communication individuelle 20 peut également être prévue pour comprendre un circuit de transmission radiofréquence permettant la transmission par voie radiofréquence des signaux de communication nécessaires au fonctionnement du module.

Le module de pulvérisation selon l'invention peut comprendre un logement 19, par exemple sous la forme d'un boîtier, adapté pour recevoir et abriter l'unité de commande et/ou de contrôle électronique 17 et, le cas échéant, l'interface de communication. En outre, le logement 19 peut être monté sur la tuyère 1 ou intégré dans cette dernière (voir notamment les figures 1, 2, 3, 4a, 4b, 5, 12).

Le module de pulvérisation selon l'invention peut comprendre en outre un carter qui peut recevoir et abriter l'unité de pulvérisation. D'autre part, un tel carter peut aussi être prévu pour former le support 10 pour la pompe électronique 11 (figures 1, 2, 8, 9, 10).

Si on se réfère notamment aux figures 1, 2, 3, 4a, 4b, 5 on peut voir que le carter 10 peut être fixé par exemple sur la tuyère 1, par exemple par encliquetage ou emboitage. A cet effet, le carter 10 peut présenter une forme globalement cylindrique dont les extrémités ouvertes comportent chacune une nervure interne 10a globalement circulaire ou ovale et la tuyère 1 peut comprendre à chacune de ses extrémités une rainure 1d globalement circulaire ou ovale adaptée pour recevoir par encliquetage ou emboîtement l'une des nervures internes 10a. Le carter 10 peut être réalisé en deux demi coques. Les deux demi-coques peuvent être en outre reliées entre elles par vissage.

Si on se réfère maintenant aux figures 10 et 11, on peut voir que l'invention a encore pour objet un système de pulvérisation et de pilotage destiné à être embarqué sur une machine ou un engin mobile 23, ledit système comprenant une pluralité de modules de pulvérisation pour la pulvérisation d'un liquide sous forme de gouttelettes 18 pour le traitement d'une cible telle que par exemple une haie végétale 21, ledit liquide provenant d'un réservoir.

Conformément à la présente invention, un tel système de pulvérisation et de pilotage comprend en outre un pupitre de commande 16 comprenant une unité centrale électronique de pilotage 13 et une interface homme machine 16a, dite IHM, reliée à cette dernière, chaque module de pulvérisation consistant en un module de pulvérisation compact tel que défini selon la présente invention.

Toujours conformément à la présente invention, l'unité centrale électronique de pilotage 13 est reliée fonctionnellement à chaque module de pulvérisation de sorte à permettre un pilotage individuel à distance de chaque module de pulvérisation, indépendamment du ou des autres modules de pulvérisation, à partir dudit pupitre de commande pour régler individuellement les paramètres de pulvérisation et de fonctionnement de chaque module de pulvérisation.

Parmi les paramètres de pulvérisation, l'invention peut prévoir par exemple :
- le débit de liquide transformé en gouttelettes par l'atomiseur rotatif 3 lors de la rotation de sa surface de réception 3a,
- la taille des gouttelettes,
- la vitesse du flux d'air porteur portant lesdites gouttelettes sur la cible.

L'IHM 16a peut comprendre un écran d'affichage 160a prévu pour afficher de manière visuelle au moins l'une des informations de contrôle et/ou au moins l'une des informations de consigne telles que définies précédemment, ce en vue de pouvoir contrôler et suivre en temps réel le fonctionnement de chaque module de pulvérisation directement à partir du pupitre de commande 16. Par exemple, un tel écran d'affichage permet d'afficher les vitesses d'air et la quantité de liquide pulvérisé par les modules de pulvérisation.

L'IHM 16a peut également comprendre des périphériques 160b tels qu'un joystick et/ou des boutons poussoirs permettant à l'utilisateur de réaliser les différents commandes, réglages ou contrôles du système, par exemple le réglage d'un mode manuel ou automatique du système, le réglage du débit de liquide à pulvériser à partir de tel ou tel module de pulvérisation sélectionné ou encore le réglage de la largeur de rang en sélectionnant en fonction de cette largeur le nombre de module de pulvérisation à mettre en marche.

Plus particulièrement, l'unité centrale 13 de pilotage et l'unité de commande et/ou de contrôle électronique 17 de chaque module peuvent être configurées pour pouvoir adapter, de façon instantanée, d'une part, la quantité de gouttelettes et le débit de la pompe électrique 11 en commandant le fonctionnement de cette dernière et, d'autre part, la taille des gouttelettes et/ou la vitesse de ces dernières et/ou la vitesse d'air en sortie de tuyère 1 en commandant et contrôlant le fonctionnement du système d'entraînement 4, 4a pour réguler la vitesse de rotation de la surface de réception 3a de l'atomiseur 3 et/ou la vitesse de rotation de l'hélice 2a du ventilateur 2. Cela permet notamment d'adapter les paramètres de pulvérisation du liquide, tel que de la bouille, à la fois en fonction de la cible, telle que de la végétation, rencontrée dans le sens de déplacement de la machine ou de l'engin mobile 23 portant un tel module mais aussi, à un instant donné, le long d'une rampe de pulvérisation comportant plusieurs modules selon la cible positionnée en regard de chaque module. A chaque instant la régulation des paramètres de pulvérisation du liquide permet soit l'arrêt instantané d'un des paramètres du module (immédiat pour la pompe, de l'ordre d'une à deux secondes pour l'hélice), soit la mise en route instantanée d'au moins un de ces paramètres (moins d'une seconde pour relancer l'hélice et générer le flux d'air porteur souhaité, mise en route instantanée de la pompe à la vitesse de rotation souhaitée et donc au débit souhaité) de façon à générer sur la cible un pinceau de traitement homogène, les pinceaux de chaque module se recouvrant très légèrement pour assurer le traitement de l'ensemble de la couverture végétale en regard de la rampe de modules.

Dans un tel système de pulvérisation, l'unité de commande et/ou de contrôle électronique 17 de chaque module peut être adaptée pour contrôler et/ou commander le système d'entraînement 4, 4a à moteur(s) électrique(s) et la pompe électrique 11 à partir de signaux de pilotage envoyés, par l'unité centrale 13 via l'interface de communication, à l'unité de commande et/ou de contrôle électronique 17 individuelle concernée (figure 11).

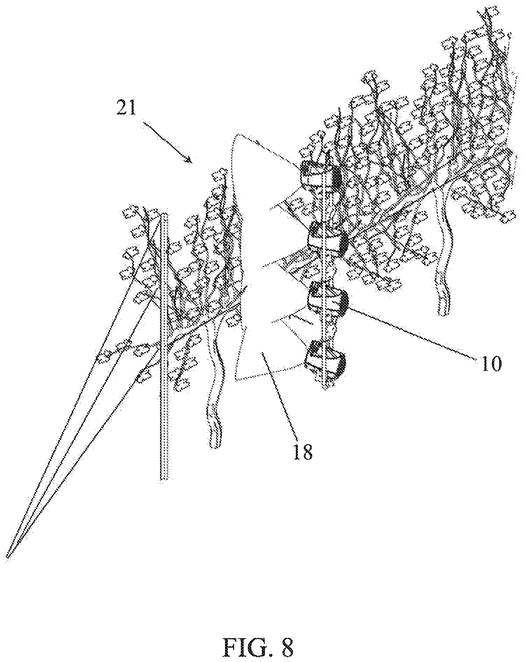

Un tel système de pulvérisation et de pilotage peut être équipé d'au moins une rampe de pulvérisation formant un support solidaire de la machine ou de l'engin mobile 23 et étant prévue pour porter une pluralité de modules (figures 8 et 10).

D'autre part, comme on peut le voir sur la figure 11, un tel système de pulvérisation et de pilotage selon la présente invention peut comprendre un bus de communication central 25 permettant de relier fonctionnellement chaque module de pulvérisation à l'unité centrale 13.

Comme on peut le voir encore sur la figure 11, un tel système de pulvérisation et de pilotage peut comprendre en outre un système de détection 24 relié fonctionnellement à l'unité centrale 13, le cas échéant par l'intermédiaire du bus de communication central 25 ou par radiofréquence. Le système de détection 24 peut être adapté pour détecter une absence ou une présence de la cible 21 et/ou un profil de cible et pour transmettre à l'unité centrale 13 une information relative à ladite détection de sorte à réaliser le pilotage individuel de chaque module de pulvérisation en fonction de ladite information détectée.

Dans un tel système de pulvérisation, l'unité centrale 13 peut comprendre une passerelle de communication reliée fonctionnellement au bus de communication central 25 et chaque module de pulvérisation peut être relié fonctionnellement à ce dernier de sorte à permettre à l'unité centrale 13 de piloter individuellement à distance chaque module de pulvérisation via ledit bus de communication central 25.

Plus particulièrement, le système de détection 24 peut comprendre des moyens de détection de présence 24a, tels que par exemple un ou plusieurs capteurs à ultrasons, infrarouges, lasers..., permettant de détecter la présence ou l'absence de la cible 21 et étant adaptés pour transmettre à l'unité centrale 13 un signal représentatif de cette détection, ladite unité centrale 13 étant adaptée pour piloter en fonction de cette détection, au moins l'un des modules de pulvérisation en commandant et contrôlant soit la mise en marche, respectivement l'arrêt, du fonctionnement de sa propre pompe électrique 11 et/ou de son système d'entraînement 4, 4a. Il peut aussi comprendre des moyens de détection de profil de cible 24b permettant de détecter une grandeur physique apportant une information sur le profil de la cible 21, tels que sa surface ou sa densité, et étant adaptés pour transmettre à l'unité centrale 13 un signal représentatif de cette information, ladite unité centrale 13 étant adaptée pour piloter individuellement chaque module de pulvérisation en fonction de cette information en commandant et en contrôlant le fonctionnement de la pompe électrique 11 pour régler le débit du liquide alimentant l'atomiseur rotatif 3 et/ou le fonctionnement du système d'entraînement 4, 4a pour régler la vitesse du flux d'air et/ou le fonctionnement de l'atomiseur rotatif 3 pour régler la taille des gouttelettes et/ou la vitesse du flux d'air.

Le système de détection 24 peut comprendre à la fois de tels moyens de détection présence et de tels moyens de détection de profil de cible.

Ainsi, une telle unité de pulvérisation ou un tel module ou un tel système de pulvérisation, selon l'invention, permet de pulvériser, à partir d'une ou plusieurs unités de pulvérisation ou de modules, de façon dynamique, un liquide sous la forme de gouttelettes 18 en taille et en quantité adaptées et mêlées à un flux d'air porteur non perturbé capable de balayer la cible, notamment la végétation, située à distance en regard de l'ouverture de sortie d'air, sous la forme d'un pinceau homogène de gouttelettes de liquides. La taille et la quantité de gouttelettes peuvent ainsi être adaptées en fonction de la nature du liquide pulvérisé, du volume de végétal à traiter, de l'âge et du type de végétation située dans le pinceau de traitement du module, tout en limitant les projections en dehors de la végétation à traiter et sans modification structurelle du module en passant d'un type de végétation à un autre ou d'un produit de traitement à un autre. Le débit de liquide, la taille des gouttelettes, et la vitesse du flux d'air porteur peuvent ainsi être modifiés de façon instantanée, à distance et, le cas échéant, de façon différente d'un module à un autre dans un système selon l'invention, sans intervention humaine directe sur le module, les modifications étant pilotées à distance et de façon instantanée par l'opérateur de la machine ou de façon automatique.

Un tel système permet de réduire au maximum la quantité de produit (le liquide) appliqué sur la cible 21, tel qu'une vigne, en le distribuant essentiellement sur cette dernière et permet par exemple d'apporter, par exemple, au moins l'une des fonctionnalités et les avantages suivants :
- réglage des paramètres de pulvérisation sur le pupitre de commande 16 depuis la cabine de l'engin mobile 23, supprimant le contact entre l'utilisateur et le produit phytosanitaire (liquide),
- réglage sur le pupitre de commande 16 du type de cible, de la largeur de rang ainsi que du débit théorique de produit à pulvériser par unité de surface et/ou sélection du produit à pulvériser, le système ayant en mémoire les doses homologuées de ce produit,
- réglage du débit et de la largeur de rang sur le pupitre de commande 16 dans le but de modifier automatiquement les paramètres de pulvérisation en cours de traitement,
- variations du débit de la pompe électrique 11 proportionnellement à la vitesse d'avancement de l'engin mobile 23,
- réglage manuel et/ou automatique instantané du débit, de la vitesse d'air ou de la taille des gouttelettes sur chaque module de pulvérisation afin d'optimiser l'application du liquide 18 sur la cible 21,
- détection automatique de la cible afin de déclencher et d'arrêter la pulvérisation lorsque le système détecte la cible 21 (par exemple de la végétation) en entrée de rang ou en cours de rang ou ne détecte plus de cible 21 en cours de rang ou en fin de rang,
- permettre à l'utilisateur de corréler les informations affichées sur le pupitre de commande 16 avec la quantité de liquide 18 (bouillie) préparé en début de traitement afin de vérifier que la bonne quantité de produit à été appliquée sur la cible,
- contrôler et suivre en temps réel le système de pulvérisation et de pilotage permettant de connaître par exemple la consommation électrique de chaque module de pulvérisation, la vitesse de rotation de chaque pompe électrique 11, la vérification en temps réel de la communication entre le pupitre de commande 16 et les modules de pulvérisation,
- permettre de diagnostiquer le système depuis le pupitre de commande 16, et donc par exemple depuis la cabine de l'engin mobile 23 où se trouve ledit pupitre, ainsi que le fonctionnement avant et pendant le traitement afin de déceler immédiatement tout disfonctionnement pouvant influer sur la qualité de traitement,
- simplifier le calibrage des pompes électriques 11 de chaque module, de sorte à permettre que chaque pompe électrique 11 soit réglée le plus précisément possible en appliquant un facteur de correction sur la pompe électrique 11 directement depuis le pupitre de commande 16.

L'unité centrale électronique de pilotage 13 du pupitre de commande 16, qui peut comprendre un microprocesseur, peut être prévue pour être commandée automatiquement par un programme ou logiciel. D'autre part, l'unité de commande et de contrôle électronique 17 de chaque module, et notamment le microprocesseur de chaque module, peut être prévu pour être commandé automatiquement par un programme ou logiciel. En outre, l'unité centrale électronique de pilotage 13 et/ou l'unité de commande et chaque unité de commande et de contrôle électronique 17 peuvent être prévues pour permettre une mise à jour à jour des programmes ou logiciels. Une telle mise à jour du programme ou logiciel mémorisé dans une mémoire de l'unité centrale électronique de pilotage 13 peut être effectuée à partir du pupitre de commande 16. La mise à jour du programme ou logiciel mémorisé dans une mémoire de l'unité de commande et de contrôle électronique 17 de chaque module peut être réalisée directement dans cette dernière ou à partir du pupitre de commande 16 via l'interface de communication 20 correspondante.

On comprendra que les opérations réalisées par les modules de pulvérisation peuvent être commandées manuellement par l'opérateur depuis le pupitre de commande 16 ou, le cas échéant, automatiquement par le programme ou logiciel prévu à cet effet et pouvant être activé automatiquement, par exemple, suite à une détection par les moyens de détection précités.

Bien entendu, l'invention n'est pas limitée aux modes ou formes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Unité de pulvérisation pour la pulvérisation d'un liquide sous forme de gouttelettes (18) pour le traitement d'une cible (21), telle que par exemple une haie végétale, ladite unité de pulvérisation comprenant une tuyère (1) formé par un conduit s'étendant le long d'un axe longitudinal (X) en délimitant intérieurement un espace interne principal (1c) et étant ouvert à ses extrémités pour former une ouverture d'entrée d'air (1a) et une ouverture de sortie d'air (1b), l'espace interne principal (1c) recevant au moins un atomiseur rotatif (3) monté en rotation autour d'un premier axe de rotation (X1), des moyens d'acheminement (8, 9) pour acheminer le liquide, provenant d'un système d'alimentation avec un débit variable contrôlé, jusqu'à l'atomiseur rotatif (3), un ventilateur (2) comportant au moins une hélice (2a) montée en rotation autour d'un second axe de rotation (X2) et permettant de générer un flux d'air porteur dans l'espace interne principal (1c) vers et au-delà de l'ouverture de sortie d'air (1b) et un système d'entraînement (4, 4a) à moteur(s) électrique(s) permettant d'assurer l'entraînement en rotation desdits atomiseur rotatif et hélice, des moyens de raccordement (6) à une source d'énergie électrique (22) pour fournir l'énergie électrique au système d'entraînement (4, 4a) et un fuselage (5) interne présentant un profil aérodynamique défini par une surface latérale (5a) délimitant intérieurement un espace interne secondaire (5b) et étant maintenu axialement dans l'espace interne principal (1c) entre le ventilateur (2) et l'ouverture de sortie d'air (1b) de sorte à définir, entre le fuselage (5) et la tuyère (1), un canal annulaire de circulation du flux d'air porteur entourant ledit fuselage,
unité de pulvérisation **caractérisée en ce que** ledit atomiseur rotatif (3) comprend une surface de réception (3a) prévue pour recevoir le liquide et pour assurer exclusivement, à sa périphérie ou son extrémité (3b), à l'état de rotation dudit atomiseur rotatif, la fragmentation du liquide en gouttelettes (18) et leur propulsion dans le flux d'air porteur, et **en ce que** le fuselage (5) comprend un tronçon rotatif formé par l'atomiseur rotatif (3) de sorte que la périphérie ou l'extrémité (3b) de la surface de réception (3a) s'inscrit sensiblement dans la surface latérale du fuselage (5) tout en permettant la rotation de l'atomiseur rotatif (3) et la propulsion, de préférence sensiblement perpendiculairement à l'axe longitudinal (X), des gouttelettes dans ledit canal pour être incorporées dans le flux d'air.

2. Unité de pulvérisation, selon la revendication 1, **caractérisée en ce que** les premier et second axes de rotation (X1, X2) respectifs de l'atomiseur rotatif (3) et de l'hélice (2a) sont sensiblement confondus ou confondus entre eux, de préférence sensiblement confondus ou confondus avec l'axe longitudinal (X) de la tuyère.

3. Unité de pulvérisation, selon l'une quelconque des revendications 1 à 2, **caractérisée en ce que** le système d'entraînement (4, 4a) est logé dans l'espace interne secondaire (5b) du fuselage (5).

4. Unité de pulvérisation, selon l'une quelconque des revendications 1 à 3, **caractérisée en ce que** le système d'entraînement (4) comprend au moins un moteur électrique (4) et au moins un arbre d'entraînement (4a) permettant l'entraînement en rotation de l'atomiseur rotatif (3) autour du premier axe de rotation (X1) et de l'hélice (2a) autour du second axe de rotation (X2).

5. Unité de pulvérisation, selon la revendication 4, **caractérisée en ce que** le système d'entraînement comprend un unique moteur électrique (4) commun et un unique arbre d'entraînement (4a) commun actionné en rotation autour de son axe (X1, X2) par ledit moteur électrique, ledit moteur électrique et ledit arbre d'entraînement communs permettant d'assurer à la fois la rotation de l'hélice (2a) autour du second axe de rotation (X2) et la rotation de l'atomiseur rotatif (3) autour du premier axe de rotation (X1), lesdits premier et second axe de rotation (X1, X2) étant confondus entre eux.

6. Unité de pulvérisation, selon la revendication 4 ou la revendication 5, **caractérisée en ce que** le fuselage (5) comprend au moins un tronçon de refroidissement entourant le ou les moteurs électriques (4) et étant en contact avec le flux d'air porteur pour évacuer par ledit contact une partie de la chaleur générée par le ou les moteurs électriques, ledit tronçon pouvant être réalisé en aluminium.

7. Unité de pulvérisation, selon l'une quelconque des revendications 1 à 6, **caractérisée en ce que** la surface de réception (3a) de l'atomiseur rotatif (3) s'étend dans un plan sensiblement perpendiculaire à l'axe longitudinal (X) de la tuyère (1).

8. Unité de pulvérisation, selon la revendication 7, **caractérisée en ce que** l'atomiseur rotatif (3) présente globalement une forme de disque ou de pièce tronconique ou conique et **en ce que** l'une des faces externes du disque ou de la pièce tronconique ou conique forme la surface de réception (3a).

9. Unité de pulvérisation, selon l'une quelconque des revendications 1 à 8 prises chacune en combinaison avec la revendication 4 ou la revendication 5, **caractérisée en ce que** l'atomiseur rotatif (3) est percé centralement et axialement par un alésage (3c) permettant le passage de l'arbre d'entraînement (4a) permettant sa rotation autour du premier axe de rotation (X1) via une liaison d'entraînement.

10. Unité de pulvérisation, selon l'une quelconque des revendications 1 à 9, **caractérisée en ce que** les moyens d'acheminement (8, 9) comprennent un conduit d'alimentation principal (8) prévu pour recevoir le liquide provenant d'un système d'alimentation en liquide (7, 11) et pour alimenter, directement ou indirectement, en au moins un point d'alimentation, la surface de réception rotative (3a) et **en ce que** le fuselage (5) comprend une extension latérale d'alimentation en liquide (5d) présentant un profil aérodynamique et dans laquelle passe au moins une partie du conduit d'alimentation principal (8) intégrée ou rapportée dans ladite extension qui s'étend transversalement à l'axe longitudinal de la tuyère (1) dans le canal annulaire de circulation du flux d'air porteur.

11. Unité de pulvérisation, selon la revendication 10, **caractérisée en ce que** le conduit d'alimentation principal (8) est prévu pour alimenter en liquide indirectement la surface de réception (3a), **en ce que** les moyens d'acheminement (8) comprennent en outre à cet effet au moins deux conduits d'alimentation secondaires (9) prévus chacun pour être raccordées audit conduit d'alimentation principal (8) et être situés dans l'espace interne secondaire (5b) du fuselage (5) et **en ce qu'**elle comprend en outre une pièce intermédiaire d'alimentation et de répartition (12) comportant le ou les conduits d'alimentation secondaires (9) et étant disposée dans l'espace interne secondaire (5b) du fuselage (5) entre, d'une part, le ventilateur (2), le cas échéant le moteur électrique (4), et, d'autre part, l'atomiseur rotatif (3), à proximité immédiate de ce dernier de sorte que chaque conduit d'alimentation secondaire (9) débouche à l'écart du flux d'air porteur en regard et à proximité immédiate de sa surface de réception rotative (3a) pour l'alimenter en liquide en au moins deux points d'alimentation, de préférence répartis de part et d'autre du premier axe de rotation (X1), le cas échéant de part et d'autre de l'arbre d'entraînement (4a) permettant d'assurer la rotation de la surface de réception (3a) autour dudit premier axe de rotation (X1).

12. Unité de pulvérisation, selon la revendication 11, **caractérisée en ce que** la pièce intermédiaire d'alimentation et de répartition (12) comprend une gorge annulaire (12a) de répartition du liquide comportant au moins deux orifices (12b) débouchant chacun dans l'un des conduits d'alimentation secondaires (9) et **en ce que** le conduit d'alimentation principal (8) est prévu pour déboucher dans la gorge annulaire (12a) qui assure ainsi la distribution du liquide, acheminé depuis la pompe électrique (11) par le conduit d'alimentation principal (8), dans les conduits d'alimentation secondaires (9).

13. Unité de pulvérisation, selon la revendication 12, **caractérisée en ce que** la pièce intermédiaire d'alimentation et de répartition (12) présente une forme globalement cylindrique et est percée à l'une de ses faces d'extrémité, par exemple tournée vers l'ouverture de sortie ou d'entrée d'air (1a, 1b) de la tuyère (1), par au moins deux trous d'alimentation (12d) formant respectivement les points d'alimentation en liquide, la gorge annulaire (12a) de répartition étant pratiquée dans la face latérale externe de ladite pièce d'alimentation et de répartition et les conduits d'alimentation secondaires (9) étant pratiqués dans la matière de la pièce intermédiaire d'alimentation et de répartition (12) de sorte à déboucher à l'une de leurs extrémités dans la gorge annulaire (12a) et à leur autre extrémité dans l'un desdits trous d'alimentation et **en ce que** le fuselage (5) est conçue dans sa partie recevant ladite pièce intermédiaire d'alimentation et de répartition (12) pour entourer ladite gorge annulaire en assurant une étanchéité fluidique avec cette dernière.

14. Unité de pulvérisation, selon l'une quelconque des revendications 11 à 13 prise en combinaison avec l'une quelconque des revendications 4 à 5, **caractérisée en ce que** la pièce intermédiaire d'alimentation et de répartition (12) est traversée axialement par un alésage de passage (12c) permettant le passage de l'arbre d'entraînement (4a) entraînant en rotation l'atomiseur rotatif (3).

15. Unité de pulvérisation, selon l'une quelconque des revendications 1 à 14, **caractérisé en ce que** le fuselage (5) comprend deux extrémités dont l'une, dite extrémité distale, est la plus éloignée du ventilateur (2) et **en ce que** le tronçon rotatif du fuselage (5) forme ladite extrémité distale.

16. Unité de pulvérisation, selon l'une quelconque des revendications 1 à 15, **caractérisée en ce que** la surface de réception (3a) de l'atomiseur rotatif (3) est située dans l'espace interne secondaire (5b) et la continuité axiale ou longitudinale de la surface latérale (5a) du fuselage (5) est interrompue par une fente de passage (5c) transversale permettant la propulsion des gouttelettes dans le flux d'air porteur à travers la surface latérale (5a) du fuselage (5), ladite fente de passage étant délimitée par deux bords périphériques externes en vis-à-vis dont l'un de ces derniers est formé par la périphérie ou l'extrémité (3b) de la surface de réception (3a).

17. Unité de pulvérisation, selon la revendication 15, **caractérisée en ce que** l'extrémité distale du fuselage se termine par une face d'extrémité externe s'étendant dans un plan sensiblement perpendiculaire à l'axe longitudinal de la tuyère et étant tournée vers l'ouverture de sortie d'air (1b), ladite face d'extrémité externe formant la surface de réception (3a) de l'atomiseur rotatif (3).

18. Unité de pulvérisation, selon l'une quelconque des revendications 1 à 17, **caractérisée en ce que** le fuselage (5) comprend une extension latérale d'alimentation en liquide (5d) présentant un profil aérodynamique et dans laquelle est pratiquée un canal d'alimentation du liquide formant au moins en partie le conduit d'alimentation principal (8), ladite extension s'étendant transversalement à l'axe longitudinal de la tuyère (1) dans le canal annulaire de circulation du flux d'air porteur.

19. Unité de pulvérisation, selon l'une quelconque des revendications 1 à 18 prises en combinaison avec l'une quelconque des revendications 4 à 5, **caractérisée en ce qu'**elle comprend en outre des fils électriques (6) permettant d'alimenter en courant électrique le ou chaque moteur électrique (4) et **en ce que** le fuselage (5) comprend une extension latérale d'alimentation électrique (5e) présentant un profil aérodynamique et s'étendant transversalement à l'axe longitudinal (X) de la tuyère (1) et étant traversée par un canal d'alimentation électrique (50e) formant un passage pour lesdits fils électriques (6) dans le canal annulaire de circulation du flux d'air porteur, le cas échéant, ladite extension latérale d'alimentation électrique (5e) étant éventuellement diamétralement opposée à l'extension latérale d'alimentation en liquide (5d).

20. Unité de pulvérisation, selon l'une quelconque des revendications 1 à 19, **caractérisée en ce qu'**elle comprend en outre un dispositif redresseur (14) s'étendant dans le canal annulaire de circulation du flux d'air porteur et étant disposé axialement entre le ventilateur (2) et l'atomiseur rotatif (3) de sorte à pouvoir redresser le flux d'air porteur avant son contact avec les gouttelettes, de préférence ledit dispositif redresseur étant situé à proximité du ventilateur (2).

21. Unité de pulvérisation, selon la revendication 20, **caractérisée en ce que** le dispositif redresseur comprend une pluralité d'éléments redresseurs tels que des aubes (14), chaque aube (14) s'étendant entre deux bords d'extrémité dont l'un est fixé sur le fuselage (5) et l'autre est fixé sur la tuyère (1).

22. Unité de pulvérisation, selon l'une quelconque des revendications 1 à 21, **caractérisée en ce qu'**il comprend en outre un dispositif diffuseur (15) s'étendant dans le canal annulaire de circulation du flux d'air porteur et **en ce que** ledit dispositif diffuseur (15) est disposé axialement entre le ventilateur (2) et l'atomiseur rotatif (3), de préférence à proximité de la surface de réception (3a) de ce dernier.

23. Unité de pulvérisation, selon la revendication 22, **caractérisé en ce que** le dispositif diffuseur (15) comprend trois éléments diffuseurs, dont l'un (15a) consiste en une pièce creuse centrale de forme tronconique, tandis que les deux autres éléments diffuseurs (15b) présentent chacun une forme d'aile aérodynamique s'étendant transversalement à l'axe dudit élément diffuseur (15a) tronconique et sont fixés chacun sur la face externe de révolution de ce dernier, de préférence en étant répartis de façon diamétralement opposée, lesdits éléments diffuseurs (15b) en forme d'aile étant fixés sur la tuyère (1).

24. Unité de pulvérisation, selon la revendication 18 et/ou la revendication 19 prise(s) en combinaison avec l'une quelconque des revendications 20 à 21, **caractérisée en ce que** le dispositif redresseur tel que défini dans la revendication 20 est formé par l'extension latérale d'alimentation en liquide telle que définie dans la revendication 18 et/ou l'extension latérale d'alimentation électrique telle que définie dans la revendication 19.

25. Unité de pulvérisation, selon l'une quelconque des revendications 1 à 24, **caractérisée en ce que** l'ouverture de sortie d'air (1b) présente une forme ovale.

26. Module de pulvérisation compact pour la pulvérisation d'un liquide sous forme de gouttelettes pour le traitement d'une cible (21), telle que par exemple une haie végétale, **caractérisé en ce qu'**il comprend :
- une unité de pulvérisation telle que définie selon l'une quelconque des revendications 1 à 25,
- son propre système d'alimentation (7, 11) en liquide relié fonctionnellement aux moyens d'acheminement (8, 9) de ladite unité de pulvérisation, ledit système d'alimentation comprenant une pompe électrique (11), de préférence une pompe volumétrique, plus préférentiellement une pompe péristaltique, le cas échéant associée à un capteur de débit, permettant de refouler, avec un débit variable contrôlé, le liquide, provenant d'un réservoir (26), dans lesdits moyens d'acheminement et une interface de raccordement hydraulique (7) permettant audit système d'alimentation de recevoir le liquide provenant du réservoir (26),
- un support (10) permettant de maintenir fixement la pompe électrique (8) à proximité de l'unité de pulvérisation,
- une unité électronique de commande et/ou de contrôle (17), par exemple implantée sur une carte électronique, prévue pour commander et/ou contrôler le fonctionnement du système d'entraînement (4, 4a) et du système d'alimentation en liquide (7, 11), ladite unité électronique de commande et/ou de contrôle étant reliée fonctionnellement auxdits systèmes d'entraînement et d'alimentation en liquide (4, 4a ; 7, 11),
- une interface de raccordement électrique (20) permettant le raccordement du système d'entraînement (4, 4a), de l'unité électronique de commande et/ou de contrôle (17) et du système d'alimentation en liquide à une source d'énergie électrique (22) pour assurer leur alimentation électrique.

27. Module de pulvérisation, selon la revendication 26, **caractérisé en ce qu'**il est prévu pour être connecté dans un système de pulvérisation et de pilotage comprenant une pluralité de modules de pulvérisation et un pupitre de commande (16) et **en ce qu'**il comprend en outre à cet effet une interface de communication (20) permettant de connecter l'unité de commande et/ou de contrôle électronique (17) au pupitre de commande (16), ceci afin de permettre le pilotage individuel à distance dudit module, indépendamment des autres modules, pour pouvoir adapter instantanément au moins un paramètre de pulvérisation.

28. Module de pulvérisation, selon la revendication 26 ou la revendication 27, **caractérisé en ce qu'**il comprend un logement (19) adapté pour recevoir l'unité de commande et/ou de contrôle électronique (17) et, le cas échéant, l'interface de communication (20), et **en ce que** ledit logement est monté sur la tuyère (1) ou intégré dans cette dernière.

29. Module de pulvérisation, selon l'une quelconque des revendications 26 à 28, **caractérisé en ce qu'**il comprend en outre un carter (19) abritant l'unité de pulvérisation et formant le support pour la pompe électronique (11).

30. Système de pulvérisation et de pilotage destiné à être embarqué sur une machine ou un engin mobile (23), ledit système comprenant une pluralité de modules de pulvérisation pour la pulvérisation d'un liquide sous forme de gouttelettes (18) pour le traitement d'une cible telle que par exemple une haie végétale (21), ledit liquide provenant d'un réservoir, **caractérisé en ce qu'**il comprend en outre un pupitre de commande (16) comprenant une unité centrale électronique de pilotage (13) et une interface homme machine (16a), dite IHM, reliée à cette dernière, chaque module de pulvérisation consistant en un module de pulvérisation compact tel que défini selon la revendication 27 et selon l'une quelconque des revendications 28 à 29 prises chacune en combinaison avec la revendication 27 et **en ce que** l'unité centrale électronique de pilotage (13) est reliée fonctionnellement à chaque module de pulvérisation de sorte à permettre un pilotage individuel à distance de chaque module de pulvérisation, indépendamment du ou des autres modules de pulvérisation, à partir dudit pupitre de commande pour régler individuellement les paramètres de pulvérisation et de fonctionnement de chaque module de pulvérisation.

## Patentansprüche

1. Sprüheinheit zum Zerstäuben einer Flüssigkeit in Form von Tröpfchen (18) zur Behandlung eines Ziels (21), wie beispielsweise einer Gemüsehecke,
wobei die Sprüheinheit eine Düse (1) umfasst, die gebildet ist durch einen Kanal, der sich entlang einer Längsachse (X) erstreckt, indem er intern einen Hauptinnenraum (1c) begrenzt und an seinen Enden offen ist, um eine Lufteinlassöffnung (1a) und eine Luftauslassöffnung (1b) zu bilden,
wobei der Hauptinnenraum (1c) mindestens einen Rotationszerstäuber (3) aufnimmt, der um eine erste Drehachse (X1) drehbar gelagert ist,
Fördermittel (8, 9) zum Fördern der Flüssigkeit aus einem Zuführsystem mit einem kontrollierten variablen Durchfluss zum Rotationszerstäuber (3),
einen Ventilator (2), der mindestens einen Propeller (2a) umfasst, der um eine zweite Drehachse (X2) drehbar montiert ist und es ermöglicht, einen Trägerluftstrom im Hauptinnenraum (1c) in Richtung der und über die Luftauslassöffnung (1b) hinaus zu erzeugen, und
ein Antriebssystem (4, 4a) mit Elektromotor(en) zum Drehen des Rotationszerstäubers und des Propellers,
Verbindungsmittel (6) zu einer elektrischen Energiequelle (22), um die elektrische Energie an das Antriebssystem (4, 4a) zu liefern, und
einen inneren Rumpf (5) mit einem aerodynamischen Profil, das durch eine Seitenfläche (5a) definiert ist, die intern einen sekundären Innenraum (5b) begrenzt und axial im Hauptinnenraum (1c) zwischen dem Ventilator (2) und der Luftauslassöffnung (1b) gehalten wird, um zwischen dem Rumpf (5) und der Düse (1) einen Ringkanal für die Zirkulation des den Rumpf umgebenden Trägerluftstroms zu definieren,
wobei die Sprüheinheit, **dadurch gekennzeichnet ist, dass**
der Rotationszerstäuber (3) eine Aufnahmefläche (3a) umfasst, die vorgesehen ist, um die Flüssigkeit aufzunehmen und ausschließlich an seinem Umfang oder seinem Ende (3b) im Rotationszustand des Rotationszerstäubers die Fragmentierung der Flüssigkeit in Tröpfchen (18) und deren Antrieb im Trägerluftstrom sicherzustellen,
und dass der Rumpf (5) einen Drehabschnitt umfasst, der durch den Rotationszerstäuber (3) so gebildet ist, dass der Umfang oder das Ende (3b) der Aufnahmefläche (3a) im Wesentlichen in die Seitenfläche des Rumpfes (5) passt, um die Drehung des Rotationszerstäubers (3) und des Antriebs, vorzugsweise im Wesentlichen senkrecht zur Längsachse (X), sowie die Integration von Tröpfchen in diesem Kanal in den Luftstrom zu ermöglichen.

2. Sprüheinheit nach Anspruch 1,
**dadurch gekennzeichnet, dass**
die ersten und zweiten jeweiligen Drehachsen (X1, X2) des Rotationszerstäubers (3) und des Propellers (2a) im Wesentlichen miteinander zusammenfallen oder zusammengenommen werden, vorzugsweise im Wesentlichen mit der Längsachse (X) der Düse miteinander zusammenfallen oder zusammengenommen werden.

3. Sprüheinheit nach einem der Ansprüche 1 bis 2,
**dadurch gekennzeichnet, dass**
das Antriebssystem (4, 4a) im sekundären Innenraum (5b) des Rumpfes (5) untergebracht ist.

4. Sprüheinheit nach einem der Ansprüche 1 bis 3,
**dadurch gekennzeichnet, dass**
das Antriebssystem (4) mindestens einen Elektromotor (4) und mindestens eine Antriebswelle (4a) zum Drehen des Rotationszerstäubers (3) um die erste Drehachse (X1) und des Propellers (2a) um die zweite Drehachse (X2) umfasst.

5. Sprüheinheit nach Anspruch 4,
**dadurch gekennzeichnet, dass**
das Antriebssystem einen einzigen gemeinsamen Elektromotor (4) aufweist und eine einzige gemeinsame Antriebswelle (4a), die durch den Elektromotor um ihre Achse (X1, X2) drehbar angetrieben wird,
der gemeinsame Elektromotor und die gemeinsame Antriebswelle, die es ermöglichen, sowohl die Drehung des Propellers (2a) um die zweite Drehachse (X2) als auch die Drehung des Rotationszerstäubers (3) um die erste Drehachse (X1) sicherzustellen, wobei die erste und zweite Drehachse (X1, X2) miteinander zusammengenommen werden.

6. Sprüheinheit nach Anspruch 4 oder Anspruch 5,
**dadurch gekennzeichnet, dass**
der Rumpf (5) mindestens einen Kühlabschnitt aufweist, der den/die Elektromotor(en) (4) umgibt, und
in Kontakt mit dem Trägerluftstrom ist, um durch den Kontaktteil der von dem/den Elektromotor(en) erzeugten Wärme zu evakuieren,
wobei der Abschnitt aus Aluminium herstellbar ist.

7. Sprüheinheit nach einem der Ansprüche 1 bis 6,
**dadurch gekennzeichnet, dass**
sich die Aufnahmefläche (3a) des Rotationszerstäubers (3) in einer Ebene erstreckt, die im Wesentlichen senkrecht zur Längsachse (X) der Düse (1) verläuft.

8. Sprüheinheit nach Anspruch 7,
**dadurch gekennzeichnet, dass**
der Rotationszerstäuber (3) eine im Allgemeinen scheibenförmige oder kegelstumpfförmige oder konische Teileform aufweist
und dass eine der Außenflächen der Scheibe oder des kegelstumpfförmigen oder konischen Teils die Aufnahmefläche (3a) bildet.

9. Sprüheinheit nach einem der Ansprüche 1 bis 8, die jeweils in Kombination mit Anspruch 4 oder Anspruch 5 genommen werden,
**dadurch gekennzeichnet, dass**
der Rotationszerstäuber (3) zentral und axial eine Bohrung (3c) aufweist, die den Durchgang der Antriebswelle (4a) ermöglicht, die ihre Drehung um die erste Drehachse (X1) über eine Antriebsverbindung ermöglicht.

10. Sprüheinheit nach einem der Ansprüche 1 bis 9,
**dadurch gekennzeichnet, dass**
die Fördermittel (8, 9) einen Hauptzuführkanal (8) beinhalten, der geeignet ist, die Flüssigkeit aus einem Flüssigkeitszuführsystem (7, 11) aufzunehmen, und
zum direkten oder indirekten Zuführen mindestens einer Zuführstelle zur rotierenden Aufnahmefläche (3a) geeignet ist
und dass der Rumpf (5) eine seitliche Flüssigkeitszuführverlängerung (5d) mit einem aerodynamischen Profil umfasst
und durch die mindestens ein Teil des in der Verlängerung integrierten oder angebrachten Hauptzuführkanals (8) verläuft, der sich quer zur Längsachse der Düse (1) im Ringkanal zur Zirkulation des Trägerluftstroms erstreckt.

11. Sprüheinheit nach Anspruch 10,
**dadurch gekennzeichnet, dass**
der Hauptzuführkanal (8) so ausgelegt ist, dass er die Aufnahmefläche (3a) indirekt mit Flüssigkeit versorgt,
dass die Fördermittel (8) ferner zu diesem Zweck mindestens zwei sekundäre Zuführkanäle (9) umfassen, die jeweils dazu bestimmt sind, mit dem Hauptzuführkanal (8) verbunden
und im sekundären Innenraum (5b) des Rumpfes (5) angeordnet zu werden, und dass sie auch ein Zwischenzuführ- und Verteilerstück (12) beinhaltet, das den/die sekundären Zuführkanal/Zuführkanäle (9) umfasst
und im sekundären Innenraum (5b) des Rumpfes (5) zwischen einerseits dem Ventilator (2), ggf. dem Elektromotor (4),
und dem Rotationszerstäuber (3) andererseits, in unmittelbarer Nähe desselben, angeordnet ist, so dass sich jeder sekundäre Zuführkanal (9) vom entgegengesetzten Trägerluftstrom und in unmittelbarer Nähe seiner rotierenden Aufnahmefläche (3a) öffnet, um ihn mit Flüssigkeit an mindestens zwei Zuführstellen zu versorgen, vorzugsweise auf beiden Seiten der ersten Drehachse (XI) verteilt, wenn nötig auf beiden Seiten der Antriebswelle (4a), um die Drehung der Aufnahmefläche (3a) um die erste Drehachse (XI) sicherzustellen.

12. Sprüheinheit nach Anspruch 11,
**dadurch gekennzeichnet, dass**
das Zwischenzuführ- und Verteilerstück (12) eine Ringnut (12a) zur Flüssigkeitsverteilung mit mindestens zwei Öffnungen (12b) umfasst, die jeweils in einen der sekundären Zuführkanäle (9) münden
und dass der Hauptzuführkanal (8) so ausgebildet ist, dass er sich in die Ringnut (12a) öffnet, die somit die Verteilung der Flüssigkeit, die von der Elektropumpe (11) durch den Hauptzuführkanal (8) in die sekundären Zuführkanäle (9) gefördert wird, gewährleistet.

13. Sprüheinheit nach Anspruch 12,
**dadurch gekennzeichnet, dass**
das Zwischenzuführ- und Verteilerstück (12) eine im Allgemeinen zylindrische Form aufweist
und an einer seiner Stirnseiten, beispielsweise der Auslass- oder Lufteinlassöffnung (1a, 1b) der Düse (1) zugewandt, durch mindestens zwei Zuführlöcher (12d) gebohrt wird, die jeweils die Flüssigkeitszuführstellen bilden,
wobei Ringnut (12a) zur Verteilung in der äußeren Seitenfläche des Zuführ- und Verteilungsstücks vorgesehen ist
und die sekundären Zuführkanäle (9) aus dem Material des Zwischenzuführ- und Verteilerstück (12) hergestellt sind, um an einem Ende in die Ringnut (12a) und am anderen Ende in eines der Zuführlöcher zu öffnen
und dass der Rumpf (5) in seinem Teil, der das Zwischenzuführ- und Verteilerstück (12) aufnimmt, so konstruiert ist, dass er die Ringnut umgibt, wobei er eine Fluiddichtung mit dieser bereitstellt.

14. Sprüheinheit nach einem der Ansprüche 11 bis 13 in Kombination mit einem der Ansprüche 4 bis 5,
**dadurch gekennzeichnet, dass**
das Zwischenzuführ- und Verteilerstück (12) axial durch eine Durchgangsbohrung (12c) durchlaufen wird, die den Durchgang der Antriebswelle (4a) ermöglicht, die den Rotationszerstäuber (3) in Rotation versetzt.

15. Sprüheinheit nach einem der Ansprüche 1 bis 14,
**dadurch gekennzeichnet, dass**
der Rumpf (5) zwei Enden umfasst, von denen eines, das als distales Ende bezeichnet wird, das am weitesten vom Ventilator (2) entfernt ist, und dass der rotierende Abschnitt des Rumpfes (5) das distale Ende bildet.

16. Sprüheinheit nach einem der Ansprüche 1 bis 15,
**dadurch gekennzeichnet, dass**
die Aufnahmefläche (3a) des Rotationszerstäubers (3) im sekundären Innenraum (5b) angeordnet ist und die axiale oder longitudinale Kontinuität der Seitenfläche (5a) des Rumpfes (5) durch einen transversalen Durchgangsschlitz (5c) unterbrochen ist, der es ermöglicht, die Tröpfchen im Trägerluftstrom durch die Seitenfläche (5a) des Rumpfes (5) zu treiben,
wobei der Durchgangsschlitz durch zwei gegenüberliegende äußere Umfangskanten begrenzt ist, von denen eine durch den Umfang oder das Ende (3b) der Aufnahmefläche (3a) gebildet ist.

17. Sprüheinheit nach Anspruch 15,
**dadurch gekennzeichnet, dass**
das distale Ende des Rumpfes mit einer äußeren Stirnfläche endet, die sich in einer Ebene erstreckt, die im Wesentlichen senkrecht zur Längsachse der Düse verläuft und der Luftauslassöffnung (1b) zugewandt ist,
wobei die äußere Stirnfläche die Aufnahmefläche (3a) des Rotationszerstäubers (3) bildet.

18. Sprüheinheit nach einem der Ansprüche 1 bis 17,
**dadurch gekennzeichnet, dass**
wobei der Rumpf (5) eine seitliche Flüssigkeitszuführverlängerung (5d) mit einem aerodynamischen Profil umfasst
und in der ein Flüssigkeitsversorgungskanal vorgesehen ist, der mindestens einen Teil des Hauptzuführkanals (8) bildet,
wobei sich die Verlängerung quer zur Längsachse der Düse (1) im Ringkanal der Strömung des Trägerluftstroms erstreckt.

19. Sprüheinheit nach einem der Ansprüche 1 bis 18 in Kombination mit einem der Ansprüche 4 bis 5,
**dadurch gekennzeichnet, dass**
sie ferner elektrische Drähte (6) zum Zuführen von elektrischer Energie zu dem oder jedem Elektromotor (4) umfasst
und dass der Rumpf (5) eine seitliche Stromzuführverlängerung (5e) mit einem aerodynamischen Profil umfasst, die sich quer zur Längsachse (X) der Düse (1) erstreckt
und von einem Stromversorgungskanal (50e) durchquert wird, der einen Durchgang für die elektrischen Drähte (6) in dem Ringkanal zur Zirkulation des Trägerluftstroms bildet, Wobei gegebenenfalls die seitliche Stromversorgungserweiterung (5e) optional diametral gegenüber der seitlichen Flüssigkeitszuführerweiterung (5d) angeordnet ist.

20. Sprüheinheit nach einem der Ansprüche 1 bis 19,
**dadurch gekennzeichnet, dass**
sie ferner eine Gleichrichtervorrichtung (14) umfasst, die sich im Ringkanal des Stroms des Trägerluftstroms erstreckt
und axial zwischen dem Ventilator (2) und dem Rotationszerstäuber (3) angeordnet ist, so dass der Trägerluftstrom vor seinem Kontakt mit den Tröpfchen gerichtet werden kann, vorzugsweise wobei sich die Gleichrichtervorrichtung in der Nähe des Ventilators (2) befindet.

21. Sprüheinheit nach Anspruch 20,
**dadurch gekennzeichnet, dass**
die Gleichrichtervorrichtung eine Vielzahl von Gleichrichterelementen, wie beispielsweise Lamellen (14), umfasst,
wobei sich jede Lamelle (14) zwischen zwei Endkanten erstreckt, von denen eine am Rumpf (5) und die andere an der Düse (1) befestigt ist.

22. Sprüheinheit nach einem der Ansprüche 1 bis 21,
**dadurch gekennzeichnet, dass**
sie ferner eine Diffusorvorrichtung (15) umfasst, die sich im Ringkanal des Stroms des Trägerluftstroms erstreckt
und dass die Diffusorvorrichtung (15) axial zwischen dem Ventilator (2) und dem Rotationszerstäuber (3) angeordnet ist, vorzugsweise in der Nähe der Aufnahmefläche (3a) desselben.

23. Sprüheinheit nach Anspruch 22,
**dadurch gekennzeichnet, dass**
die Diffusorvorrichtung (15) drei Diffusorelemente umfasst, von denen eines (15a) aus einem zentralen hohlen Teil mit Kegelstumpfform besteht, während die anderen beiden Diffusorelemente (15b) jeweils eine aerodynamische Flügelform aufweisen, die sich quer zur Achse des Kegelstumpfdiffusorelements (15a) erstreckt und jeweils an dessen Außenfläche befestigt ist, vorzugsweise diametral entgegengesetzt verteilt, wobei die flügelförmigen Diffusorelemente (15b) an der Düse (1) befestigt sind.

24. Sprüheinheit nach Anspruch 18 und/oder Anspruch 19, in Kombination mit einem der Ansprüche 20 bis 21,
**dadurch gekennzeichnet, dass**
die Gleichrichtervorrichtung nach Anspruch 20 durch die seitliche Flüssigkeitszufuhrverlängerung nach Anspruch 18 und/oder die seitliche Stromversorgungsverlängerung nach Anspruch 19 gebildet wird.

25. Sprüheinheit nach einem der Ansprüche 1 bis 24,
**dadurch gekennzeichnet, dass**
die Luftauslassöffnung (1b) oval ausgebildet ist.

26. Kompaktes Sprühmodul zum Versprühen einer Flüssigkeit in Form von Tröpfchen zur Behandlung eines Ziels (21), wie beispielsweise einer Gemüsehecke,
**dadurch gekennzeichnet, dass** es umfasst:
- eine Sprüheinheit nach einem der Ansprüche 1 bis 25,
- sein eigenes Flüssigkeitszuführsystem (7, 11), das funktionsfähig mit den Fördermitteln (8, 9) der Sprüheinheit verbunden ist,
wobei das Zuführsystem eine elektrische Pumpe (11), vorzugsweise eine volumetrische Pumpe, insbesondere vorzugsweise eine peristaltische Pumpe, der gegebenenfalls einem Strömungssensor zugeordnet ist, wobei zur Förderung mit einer kontrollierten variablen Durchflussmenge, die aus einem Behälter (26) stammende Flüssigkeit in das Fördermittel und eine hydraulische Verbindungsschnittstelle (7) abgegeben werden kann, die es dem Zuführsystem ermöglicht, die aus dem Behälter (26) stammende Flüssigkeit aufzunehmen,
- eine Halterung (10) zum festen Halten der elektrischen Pumpe (8) in der Nähe der Sprüheinheit,
- eine elektronische Befehls- und/oder Steuereinheit (17), beispielsweise auf einer elektronischen Platine montiert, zum Steuern und/oder Überwachen des Betriebs des Antriebssystems (4, 4a) und des Flüssigkeitszuführsystems (7, 11),
wobei die elektronische Befehls- und/oder Steuereinheit funktionell mit dem Antriebs- und Flüssigkeitszuführsystem (4, 4a; 7, 11) verbunden ist,
- eine elektrische Verbindungsschnittstelle (20) zum Verbinden des Antriebssystems (4, 4a), der elektronischen Steuer- und/oder Kontrolleinheit (17) und des Flüssigkeitszuführsystems mit einer elektrischen Energiequelle (22), um deren elektrische Versorgung sicherzustellen.

27. Sprühmodul nach Anspruch 26,
**dadurch gekennzeichnet, dass**
es dazu bestimmt ist, in einem Sprüh- und Steuersystem verbunden zu werden, das eine Vielzahl von Sprühmodulen und ein Bedienfeld (16) umfasst und dass es ferner zu diesem Zweck eine Kommunikationsschnittstelle (20) zum Verbinden der elektronischen Befehls- und/oder Steuereinheit (17) mit dem Bedienfeld (16) umfasst,
um der individuellen Fernsteuerung des Moduls unabhängig von den anderen Modulen zu ermöglichen, mindestens einen Sprühparameter sofort anpassen zu können.

28. Sprühmodul nach Anspruch 26 oder Anspruch 27,
**dadurch gekennzeichnet, dass**
es ein Gehäuse (19) umfasst, das geeignet ist, die elektronische Befehls- und/oder Steuereinheit (17) und, gegebenenfalls, die Kommunikationsschnittstelle (20) aufzunehmen,
und dass das Gehäuse an der Düse (1) montiert oder in diese integriert ist.

29. Sprühmodul nach einem der Ansprüche 26 bis 28,
**dadurch gekennzeichnet, dass**
es ferner ein Gehäuse (19) umfasst, das die Sprüheinheit aufnimmt und den Träger für die elektronische Pumpe (11) bildet.

30. Sprüh- und Steuerungssystem, das dazu bestimmt ist, an einer Maschine oder einer mobilen Maschine (23) montiert zu werden,
wobei das System eine Vielzahl von Sprühmodulen zum Versprühen einer Flüssigkeit in Form von Tröpfchen (18) zum Behandeln eines Ziels, wie beispielsweise einer Pflanzenhecke (21), umfasst, wobei die Flüssigkeit aus einem Reservoir stammt, **dadurch gekennzeichnet, dass** es ferner ein Bedienfeld (16) umfasst, das eine zentrale elektronische Steuereinheit (13) und eine Mensch-Maschine-Schnittstelle (16a), bekannt als HMI, umfasst, die mit dieser verbunden ist,
wobei jedes Sprühmodul aus einem kompakten Sprühmodul nach Anspruch 27 und einem der Ansprüche 28 bis 29 jeweils in Kombination mit Anspruch 27 besteht und dass die zentrale elektronische Steuereinheit (13) funktionsfähig mit jedem Sprühmodul verbunden ist, um eine individuelle Fernsteuerung jedes Sprühmoduls, unabhängig von dem/den anderen Sprühmodul(en), von dem Bedienfeld aus zu ermöglichen, um die Sprüh- und Betriebsparameter jedes Sprühmoduls individuell einzustellen.

## Claims

1. A spraying unit for the spraying of a liquid in the form of droplets (18) for the treatment of a target (21), such as, for example, a hedge of vegetation, said spraying unit including a nozzle (1) formed by a conduit that extends along a longitudinal axis (X), delimiting on the inside a main inner space (1c) and being open at its ends to form an air inlet opening (1a) and an air outlet opening (1b), the main inner space (1c) receiving at least one rotary atomizer (3) mounted in rotation around a first axis of rotation (X1), directing means (8, 9) for directing the liquid, originating from a supply system with a controlled variable flow rate, as far as the rotary atomizer (3), a fan (2) comprising at least one propeller (2a) mounted in rotation around a second axis of rotation (X2) and making it possible to generate a stream of carrier air in the main inner space (1c) toward and beyond the air outlet opening (1b) and a drive system (4, 4a) with electric motor(s) making it possible to ensure driving in rotation of said rotary atomizer and propeller, means (6) for connecting to an electrical energy source (22) for providing the electrical energy to the drive system (4, 4a), and an inner fuselage (5) that has an aerodynamic profile defined by a lateral surface (5a) delimiting on the inside a secondary inner space (5b) and being kept axially in the main inner space (1c) between the fan (2) and the air outlet opening (1b) in such a way as to define, between the fuselage (5) and the nozzle (1), an annular channel for circulation of the stream of carrier air surrounding said fuselage,
the spraying unit **characterized in that** said rotary atomizer (3) includes a receiving surface (3a) that is provided to receive the liquid and to ensure exclusively, on its periphery or its end (3b), in the state of rotation of said rotary atomizer, the breaking up of the liquid into droplets (18) and their propulsion into the stream of carrier air, and **in that** the fuselage (5) includes a rotary section that is formed by the rotary atomizer (3) in such a way that the periphery or the end (3b) of the receiving surface (3a) substantially fits within the lateral surface of the fuselage (5) while making possible the rotation of the rotary atomizer (3) and the propulsion, preferably substantially perpendicular to the longitudinal axis (X), of the droplets in said channel to be incorporated in the air stream.

2. The spraying unit, according to Claim 1, **characterized in that** the respective first and second axes of rotation (X1, X2) of the rotary atomizer (3) and of the propeller (2a) are substantially combined or combined with one another, preferably substantially combined or combined with the longitudinal axis (X) of the nozzle.

3. The spraying unit, according to any one of Claims 1 to 2, **characterized in that** the drive system (4, 4a) is housed in the secondary inner space (5b) of the fuselage (5).

4. The spraying unit, according to any one of Claims 1 to 3, **characterized in that** the drive system (4) includes at least one electric motor (4) and at least one drive shaft (4a) that makes possible driving in rotation of the rotary atomizer (3) around the first axis of rotation (X1) and of the propeller (2a) around the second axis of rotation (X2).

5. The spraying unit, according to Claim 4, **characterized in that** the drive system includes a single common electric motor (4) and a single common drive shaft (4a) that is actuated in rotation around its axis (X1, X2) by said electric motor, said common electric motor and said common drive shaft making it possible to ensure both the rotation of the propeller (2a) around the second axis of rotation (X2) and the rotation of the rotary atomizer (3) around the first axis of rotation (X1), with said first and second axes of rotation (X1, X2) being combined with one another.

6. The spraying unit, according to Claim 4 or Claim 5, **characterized in that** the fuselage (5) includes at least one cooling section surrounding the electric motor(s) (4) and being in contact with the stream of carrier air for evacuating by said contact a portion of the heat that is generated by the electric motor(s), with said section able to be made of aluminium.

7. The spraying unit, according to any one of Claims 1 to 6, **characterized in that** the receiving surface (3a) of the rotary atomizer (3) extends in a plane substantially perpendicular to the longitudinal axis (X) of the nozzle (1).

8. The spraying unit, according to Claim 7, **characterized in that** the rotary atomizer (3) has overall the shape of a disk or a frustoconical or conical part and **in that** one of the outer faces of the disk or of the frustoconical or conical part forms the receiving surface (3a).

9. The spraying unit, according to any one of Claims 1 to 8, each combined with Claim 4 or Claim 5, **characterized in that** the rotary atomizer (3) is pierced centrally and axially by a bore (3c) making possible the passage of the drive shaft (4a) making possible its rotation around the first axis of rotation (X1) via a drive connection.

10. The spraying unit, according to any one of Claims 1 to 9, **characterized in that** the directing means (8, 9) include a main supply conduit (8) provided to receive the liquid originating from a liquid supply system (7, 11) and for supplying, directly or indirectly, at at least one supply point, the rotary receiving surface (3a), and **in that** the fuselage (5) includes a lateral liquid supply extension (5d) that has an aerodynamic profile and in which at least a portion of the main supply conduit (8) that is integrated or connected in said extension runs, which extends transversely to the longitudinal axis of the nozzle (1) in the annular channel for circulation of the stream of carrier air.

11. The spraying unit, according to Claim 10, **characterized in that** the main supply conduit (8) is provided for indirectly supplying the receiving surface (3a) with liquid, **in that** the directing means (8) further include for this purpose at least two secondary supply conduits (9), each provided for being connected to said main supply conduit (8) and being situated in the secondary inner space (5b) of the fuselage (5), and **in that** it further includes an intermediate part for supply and distribution (12) comprising the secondary supply conduit(s) (9) and being disposed in the secondary inner space (5b) of the fuselage (5) between, on the one hand, the fan (2), if applicable the electric motor (4), and, on the other hand, the rotary atomizer (3), in immediate proximity to the latter in such a way that each secondary supply conduit (9) emerges separately from the stream of carrier air facing it and in immediate proximity to its rotary receiving surface (3a) to supply it with liquid at at least two supply points, preferably distributed on both sides of the first axis of rotation (XI), if applicable on both sides of the drive shaft (4a) making it possible to ensure the rotation of the receiving surface (3a) around said first axis of rotation (X1).

12. The spraying unit, according to Claim 11, **characterized in that** the intermediate supply and distribution part (12) includes an annular groove (12a) for distribution of the liquid comprising at least two openings (12b) that each emerge into one of the secondary supply conduits (9) and **in that** the main supply conduit (8) is provided to emerge in the annular groove (12a) which thus ensures the distribution of the liquid, directed from the electric pump (11) via the main supply pipe (8), into the secondary supply pipes (9).

13. The spraying unit, according to Claim 12, **characterized in that** the intermediate supply and distribution part (12) has an overall cylindrical shape and is pierced at one of its end faces, for example turned toward the air outlet or inlet opening (1a, 1b) of the nozzle (1), by at least two supply holes (12d) respectively forming the liquid supply points, the annular distribution groove (12a) being made in the outer lateral face of said supply and distribution part, and the secondary supply conduits (9) being made in the material of the intermediate supply and distribution part (12) in such as way as to emerge at one of their ends into the annular groove (12a) and at their other end into one of said supply holes, and **in that** the fuselage (5) is designed in its part receiving said intermediate supply and distribution part (12) to surround said annular groove, ensuring fluid sealing with the latter.

14. The spraying unit, according to any one of Claims 11 to 13, combined with any one of Claims 4 to 5, **characterized in that** the intermediate supply and distribution part (12) is axially traversed by a passage bore (12c) that allows the passage of the drive shaft (4a), driving in rotation the rotary atomizer (3).

15. The spraying unit, according to any one of Claims 1 to 14, **characterized in that** the fuselage (5) includes two ends, one of which, designated the distal end, is the farthest from the fan (2), and **in that** the rotary section of the fuselage (5) forms said distal end.

16. The spraying unit, according to any one of Claims 1 to 15, **characterized in that** the receiving surface (3a) of the rotary atomizer (3) is situated in the secondary inner space (5b) and the axial or longitudinal continuity of the lateral surface (5a) of the fuselage (5) is interrupted by a transverse passage slot (5c) that makes possible the propulsion of the droplets into the stream of carrier air through the lateral surface (5a) of the fuselage (5), said passage slot being delimited by two outer mutually opposite peripheral edges, of which one of the latter is formed by the periphery or the end (3b) of the receiving surface (3a).

17. The spraying unit, according to Claim 15, **characterized in that** the distal end of the fuselage terminates by an outer end face that extends into a plane that is substantially perpendicular to the longitudinal axis of the nozzle and that is turned toward the air outlet opening (1b), said outer end face forming the receiving surface (3a) of the rotary atomizer (3).

18. The spraying unit, according to any one of Claims 1 to 17, **characterized in that** the fuselage (5) includes a lateral liquid supply extension (5d) that has an aerodynamic profile and in which a liquid supply channel is made that forms at least in part the main supply conduit (8), said extension extending transversely to the longitudinal axis of the nozzle (1) in the annular channel for circulation of the stream of carrier air.

19. The spraying unit, according to any one of Claims 1 to 18 combined with any one of Claims 4 to 5, **characterized in that** it further includes electrical wires (6) that make it possible to supply the or each electric motor (4) with electric current and **in that** the fuselage (5) includes a lateral electrical supply extension (5e) having an aerodynamic profile and extending transversely to the longitudinal axis (X) of the nozzle (1) and being traversed by an electrical supply channel (50e) that forms a passage for said electrical wires (6) in the annular channel for circulation of the stream of carrier air, if applicable, said lateral electrical supply extension (5c) optionally being diametrically opposite to the lateral liquid supply extension (5d).

20. The spraying unit, according to any one of Claims 1 to 19, **characterized in that** it further includes a straightening device (14) that extends in the annular channel for circulation of the stream of carrier air and that is disposed axially between the fan (2) and the rotary atomizer (3) in such a way as to be able to straighten the stream of carrier air before its contact with the droplets, preferably with said straightening device being situated close to the fan (2) .

21. The spraying unit, according to Claim 20, **characterized in that** the straightening device includes a plurality of straightening elements such as blades (14), each blade (14) extending between two end edges, one of which is attached to the fuselage (5) and the other of which is attached to the nozzle (1).

22. The spraying unit, according to any one of Claims 1 to 21, **characterized in that** it further includes a diffuser device (15) extending in the annular channel for circulation of the stream of carrier air and **in that** said diffuser device (15) is disposed axially between the fan (2) and the rotary atomizer (3), preferably close to the receiving surface (3a) of the latter.

23. The spraying unit, according to Claim 22, **characterized in that** the diffuser device (15) includes three diffuser elements, one of which (15a) consists of a central hollow part with a frustoconical shape, while the other two diffuser elements (15b) each have an aerodynamic wing shape that extends transversely to the axis of said frustoconical diffuser element (15a) and are each attached to the outer rotation face of the latter, preferably by being distributed in a diametrically opposite way, with said wing-shaped diffuser elements (15b) being attached to the nozzle (1).

24. The spraying unit, according to Claim 18 and/or Claim 19 combined with any one of Claims 20 to 21, **characterized in that** the straightening device as defined in Claim 20 is formed by the lateral liquid supply extension as defined in Claim 18 and/or the lateral electrical supply extension as defined in Claim 19.

25. The spraying unit, according to any one of Claims 1 to 24, **characterized in that** the air outlet opening (1b) has an oval shape.

26. A compact spraying module for the spraying of a liquid in the form of droplets for the treatment of a target (21), such as, for example, a hedge of vegetation, **characterized in that** it includes:
- a spraying unit as defined according to any one of Claims 1 to 25,
- its own liquid supply system (7, 11) functionally connected to the directing means (8, 9) of said spraying unit, with said supply system including an electric pump (11), preferably a volumetric pump, more preferably a peristaltic pump, if applicable associated with a flow rate sensor, making it possible to push back, with a controlled variable flow rate, the liquid originating from a reservoir (26), in said directing means, and a hydraulic connection interface (7) that makes it possible for said supply system to receive the liquid originating from the reservoir (26),
- a support (10) that makes it possible to fixedly hold the electric pump (8) close to the spraying unit,
- an electronic control and/or monitoring unit (17), for example inserted on a printed circuit board, provided for controlling and/or monitoring the operation of the drive system (4, 4a) and of the liquid supply system (7, 11), with said electronic control and/or monitoring unit being functionally connected to said drive and liquid supply systems (4, 4a; 7, 11),
- an electrical connection interface (20) making possible the connection of the drive system (4, 4a), the electronic control and/or monitoring unit (17) and the liquid supply system to an electrical energy source (22) to ensure their electrical supply.

27. The spraying module, according to Claim 26, **characterized in that** it is provided for being connected in a spraying and control system including a plurality of spraying modules and a control panel (16) and **in that** it further includes for this purpose a communication interface (20) that makes it possible to connect the electronic control and/or monitoring unit (17) to the control panel (16), so as to make possible the remote individual control of said module, independently of other modules, to be able to adapt instantaneously at least one spraying parameter.

28. The spraying module, according to Claim 26 or Claim 27, **characterized in that** it includes a housing (19) that is suitable for receiving the electronic control and/or monitoring unit (17) and, if applicable, the communication interface (20), and **in that** said housing is mounted on the nozzle (1) or integrated in the latter.

29. The spraying module, according to any one of Claims 26 to 28, **characterized in that** it further includes a casing (19) accommodating the spraying unit and forming the support for the electronic pump (11).

30. A spraying and control system intended to be installed on board a machine or a mobile machine (23), said system including a plurality of spraying modules for the spraying of a liquid in the form of droplets (18) for the treatment of a target such as, for example, a hedge of vegetation (21), said liquid originating from a reservoir, **characterized in that** it further includes a control panel (16) including an electronic central control unit (13) and a man-machine interface (16a), designated MMI, connected to the latter, with each spraying module consisting of a compact spraying module as defined according to Claim 27 and according to any one of Claims 28 to 29, each combined with Claim 27, and **in that** the electronic central control unit (13) is functionally connected to each spraying module in such a way as to allow a remote individual control of each spraying module, independently of the other spraying module(s), from said control panel to adjust individually the spraying and operating parameters of each spraying module.
